# EUROPEAN PATENT SPECIFICATION

(11) **EP 2 805 179 B1**
(45) Date of publication and mention of the grant of the patent: **25.04.2018**
(21) Application number: 13701587.1
(22) Date of filing: 14.01.2013
(51) Int. Cl.: G01S 7/481, G01S 7/484, G01S 7/486, G01S 17/08

(54) **OPTICAL SYSTEM FOR RANGE FINDING**
OPTISCHES SYSTEM ZUR ENTFERNUNGSMESSUNG
SYSTÈME OPTIQUE DE RECHERCHE DE PORTÉE

(30) Priority: 18.01.2012 EP 12151569
(43) Date of publication of application: 26.11.2014
(73) Proprietor: Acreo Swedish ICT AB, 164 40 Kista (SE)
(72) Inventor: VANIN, Evgeny, S-122 43 Enskede (SE)
(74) Representative: Awapatent AB
(86) International application number: PCT/EP2013/050560
(87) International publication number: WO 2013/107709

(56) References cited:
- EP-A2- 1 813 964
- WO-A1-2011/000411
- US-A- 3 991 318
- US-A1- 2008 074 640
- US-B1- 7 199 924

## Description

### Technical field

The present invention generally relates to the field of range finding, or surveying. Specifically, the present invention relates to optical systems for distance measuring and methods for generating laser pulses and receiving laser pulses suitable for use in distance measuring.

### Background

Range finding or surveying involves the determination of unknown positions, surfaces or volumes of objects using measurements of angles and distances. The determined angles and distances from a measuring instrument to points under survey may be used to calculate the coordinates of surveyed points relatively to the measuring instrument. In order to make these measurements, the measuring instrument may include an electronic distance measuring (EDM) device.

Generally in EDM, a light beam is emitted as a light pulse towards a target or object, and light reflected by the target is subsequently detected at the measuring instrument, e.g. comprising an optical surveying instrument such as a total station. Processing of the detected signal may enable determination of distance to the target by means of, e.g., time-of-flight (TOF) or phase modulation techniques. Using the TOF technique, the TOF of a light pulse that travels from the measuring instrument, i.e. the EDM device, to a target or object, is reflected at the target or object, and returns to the measuring instrument, is determined. On the basis of the determined TOF of the light pulse, the distance between the measuring instrument and the target or object may then be calculated.

The power loss of the received signal may determine the maximum possible operating range for which EDM can be performed. In order to increase the operating range, the power of the light beam that is transmitted towards the target or object must be increased, or be made as large as possible in order to maximize the operating range.

In many application scenarios, the light beam is emitted as a periodic train of short laser pulses with a relatively low repetition rate. Using short pulses with a predefined pulse shape is required for achieving a high distance resolution characteristics, i.e. reduced error in the value of measured distance. Utilizing pulse trains with low repetiton rate helps to avoid ambiguity in the measurements of long distances as well as to maintain the average power of the light beam at a moderate level. In most of application scenarios, the average power of the light beam should not exceed about 10 mW for eye safety reasons.

Therefore, the transmitter part of the EDM device must be designed for generation of a pulse train with a relatively low repetition rate and high peak power in order to maximize the operating range.

Also for reasons of eye safety, the light beam that is transmitted towards the target preferably has a wavelength within the range 1.5 µm-2 µm or a wavelength exceeding 2 µm. In particular, the light beam that is transmitted towards the target may be preferred to have a wavelength of 1.55 µm since this may allow utilizing a variety of relatively inexpensive optical components in the EDM device such as have been developed in the telecommunication industry for applications in optical fiber communication systems and networks.

For example, an EDM device based on TOF technique may be based on a master oscillator power amplifier (MOPA) configuration in the transmitter part of the EDM device. The transmitter part of such an EDM device typically consists of a 'seed' laser, which for example may be constituted by a semiconductor distributed feedback laser, and an erbium-doped fiber amplifier (EDFA), comprising two or more optically isolated amplification stages. The seed laser is driven by a pulsed electrical current having a certain repetition rate. The seed laser is typically capable of producing laser pulses having an optical peak power of a few tens of mW. The laser pulses that are generated in the seed laser are then amplified in the EDFA so as to achieve a certain optical peak power. The EDFA is operated in the limited range of optical pumping power, and therefore limited optical gain, such that the shape of the laser pulses amplified by the EDFA and being output from the EDFA is well preserved and free of any drastical distortions. For example, optical peak power up to 1-1.5 kW for a 'standard' erbium-doped fiber being utilized in the EDFA may be achieved. Operating the EDFA at higher pumping power, which results in increased optical gain, and aiming at achieving the optical peak power of the laser pulses that exceeds 1-1.5 kW may lead to degradation of the EDM device performance. The degradation is caused by fiber non-linearity, i.e. dependency of the refractive index of the fiber on the optical field intensity of the laser pulses propagating in the fiber. Non-linear pulse propagation in the fiber may cause an instability process that leads to pulse shape distortions such as pulse fragmentation into several sub-pulses and strong spectral broadening of the laser pulses output from the EDFA, which laser pulses are transmitted towards the target or object, the distance to which is to be measured.

Hence, fiber non-linearity may distort the pulse shape and therefore limit the maximum achievable peak power of the laser pulses used in EDM based on TOF technique, which in turn may possibly restrict the extent of the operating range of the EDM device. To eliminate or alleviate this problem, a custom made large·mode·area fiber may possibly be utilized in the amplification stage or stages in order to reduce the intensity of the optical field in the fiber core. However, such a type of fiber may be expensive, or may be difficult to fusion splice to a standard optical fiber - if possible at all to fusion splice to a standard optical fiber, or may entail relatively high bending losses, etc.

Fiber non-linearity may restrict the signal-to-noise ratio achievable in the receiver part of the EDM device.

EP1813964A2 discloses a LADAR system which includes a detector optical arrangement defining a current optical field of view. EP1813964A2 further discloses an illumination subsystem without moving parts which transmits pulsed illumination at different times to each of a number of illumination sub-regions af the current optical field of view, and a detection subsystem, including one or more detectors, detecting reflected illumination from a corresponding one or more detection sub-region of the current optical field of view. EP1813964A2 discloses that each of the detection sub-regions overlaps illumination sub-regions so that an overlap of each of the illumination sub-regions with the detection sub-region defines a LADAR image pixel of resolution finer than the detection sub-region.

US3991318A discloses an organ array comprising a plurality of optical fibers each cut to a different length with the differences between functionally adjacent (i.e., lengthwise consecutive) fibers being uniform. US3991318A discloses that the fibers are arranged in a bundle so that one set of ends of the fibers is terminated in an input plane and the opposite set of ends is terminated in an output plane. US3991318A discloses embodiments utilizing the organ array including a passive spatial scanner, optical memory systems, an image converter, an optical sampling oscilloscope, and an x-y coordinate locater.

US7199924B1 discloses an apparatus and a method for spectral-beam combining light from a plurality of high-power fiber lasers that use two substantially identical diffraction gratings in a parallel, mutually compensating configuration to combine a plurality of separate parallel input beams each having a slightly different successively higher wavelength into a single output beam of high quality. US7199924B1 further discloses a single diffraction grating used to combine a plurality of different wavelengths, wherein the input laser beams are obtained from very narrow linewidth sources to reduce chromatic dispersion. US7199924B1 discloses that diagnostics and adjustments of wavelengths and/or positions and angles are made dynamically in real time to maintain the combination of the plurality input beams into a single high-quality output beam.

WO2011/000411A1 discloses a method for driving a laser diode such as to enable mitigation or elimination of so called spiking effects related to the number of injected carriers in the laser overshooting the equilibrium value at the beginning of the lasing process. WO2011/000411A1 discloses that in this manner, the efficiency of a master oscillator power amplifier that may be utilized in range finding applications will be improved.

US2008074640A1 discloses methods for using spectrally separated light pulses to collect more LIDAR information are presented. US2008074640A1 discloses that a monochromatic pulse is transmitted to collect range information and a white pulse is transmitted a short time afterwards to collect spectral responsivity information or color of the target. US2008074640A1 discloses that the white light pulse is used to collect both range and spectral responsivity information of the target. US2008074640A1 discloses that the spectral separated laser is spatially spread in order to collect range information over more than one point at a time.

### Summary

In view of the above discussion, a concern of the present invention is to provide an optical system for distance measuring that alleviates or even eliminates restrictions of the operating range for EDM related to fiber non-linearity.

Another concern of the present invention is to provide an optical system for distance measuring that alleviates or even eliminates restrictions on signal-to-noise ratio achievable in the receiver part of the optical system related to fiber non-linearity.

Another concern of the present invention is to provide an optical system for distance measuring that alleviates or even eliminates restrictions of the operating range for EDM related to fiber non-linearity while not requiring expensive components.

Another concern of the present invention is to provide an optical system for distance measuring that alleviates or even eliminates restrictions on signal-to-noise ratio achievable in the receiver part of the optical system related to fiber non-linearity while not requiring expensive components.

To address one or more of these concerns and other concerns, optical systems and methods in accordance with the independents claims are provided. Preferred embodiments are defined by the dependent claims.

A gist of the present invention is to spectrally combine a train of laser pulses that are generated at a number of different wavelengths in a measuring instrument, in particular an electronic distance measuring (EDM) device. Such spectral combination of a train of laser pulses generated at a number of different wavelengths may take place in an EDM device in the receiver part thereof, in the transmitter part thereof, or in both the transmitter part and the receiver part of the EDM device.

As described further in the following, by such spectral combination of a train of laser pulses, the ocurrence of high peak optical power in optical fiber of an amplification stage in the EDM device may be decreased or even eliminated, while the signal-to-noise ratio at the receiver part of the optical system and the operating range of the optical system may be increased.

According to a first aspect of the present invention, there is provided an optical system for distance measuring. The optical system comprises a transmitter and a reciver.

The transmitter comprises a laser pulse generator adapted to generate a series of laser pulses such that the laser pulses are delayed with respect to each other, and such that each laser pulse has a wavelength different from the wavelengths of other laser pulses of the series of laser pulses, or such that at least some of the laser pulses have a wavelength different from the wavelengths of other laser pulses of the series of laser pulses.

The transmitter may comprise an optical amplifier adapted to amplify laser pulses generated by the laser pulse generator having wavelengths within a predefined wavelength band.

The transmitter is adapted to transmit the amplified laser pulses and/or laser pulses generated by the laser pulse generator towards a target or object.

The receiver is adapted to receive a series of laser pulses which have been generated by reflection and/or scattering of the laser pulses transmitted by the transmitter from the target or object, respectively.

The receiver comprises a first optical delay module adapted to delay laser pulses based on the wavelength of the respective laser pulses such that the magnitudes of delays of laser pulses having different wavelengths are different. The first optical delay module is arranged such that the magnitudes of delays corresponding to different wavelengths are such that the laser pulses that are output from the first optical delay module, or at least some of the laser pulses that are output from the first optical delay module, overlap or substantially overlap each other.

In other words, the laser pulse generator may be adapted to generate a periodic train of laser pulses such that a series (finite number) of pulses is generated during each period of the pulse train, each individual laser pulse in the seriesof laser pulses having a wavelength that differs from the wavelength of other laser pulses in the series of pulses, or from the wavelength of most of the other laser pulses in the series of pulses. Each laser pulse in the pulse train may have a predefined pulse width. Successive laser pulses in a period of the pulse train may be delayed with respect to each other by one or a few laser pulse widths so as to mitigate or avoid laser pulse shape distortions.

By means of the first optical delay module, the received series of laser pulses having different wavelengths can be spectrally combined in the receiver of the optical system.

By amplification of laser pulses generated by the laser pulse generator that are delayed in respect to each other, nonlinear effects and nonlinear pulse distortions may be mitigated or even eliminated.

By the spectral combination of the received series of laser pulses achieved by means of the first optical delay module, resulting in overlapping of laser pulses output from the first optical delay module, the received signal peak power and the signal-to-noise ratio in the receiver may be increased. According to one example, for N laser pulses, each at different wavelength, in the received series of laser pulses, the overlapping of N laser pulses output from the first optical delay module may result in N times increased peak power of the received signal on basis of which TOF may be determined. Due to increased peak power of the received signal at the receiver, the operating range of the optical system may be increased, whereby the optical system may become capable of measuring larger distances between the optical system and the target or object, corresponding to higher losses of the signal during the return trip from the optical system to the object or target and back to the optical system.

The first optical delay module may for example comprise a wavelength demultiplexer (DEMUX) and a plurality of waveguides.

Each of the plurality of waveguides may correspond to one of the wavelengths of the received series of laser pulses.

Each of the plurality of waveguides may have a predefined length.

The wavelength DEMUX may be arranged so as to demultiplex the received series of laser pulses onto the plurality of waveguides, wherein the magnitudes of the lengths of the respective waveguides may be such that the laser pulses are coupled out from the plurality of waveguides at the same time, whereby the laser pulses that are output from the first optical delay module overlap or substantially overlap each other.

The wavelength DEMUX may for example be based on an array waveguide grating. The plurality of waveguides may for example comprise a plurality of optical fibers.

For example, the wavelength DEMUX may have one input port and N output optical fiber ports, where N is the number of laser pulses or wavelength channels that are used in the laser pulse train generated in the laser pulse generator of the optical system's transmitter. At the output of the wavelength DEMUX, each laser pulse of the respective N laser pulses may enter a corresponding optical fiber port. The time position of the laser pulse in each output fiber port may be related or correspond to its wavelength channel, i.e. the wavelength of the laser pulse in the output fiber port. The magnitudes of the lengths of the respective optical fibers may be such that laser pulses are coupled out from the plurality of optical fibers at the same time, whereby laser pulses that are output from the first optical delay module overlap each other.

The overlapped laser pulses output from the first optical delay module may then be coupled into or impinge on a photosensor unit such as at least one photodiode in the optical system's receiver. Thereby, a received signal may be generated which may be further processed e.g. for performing EDM.

The first optical delay module may comprise a wavelength multiplexer (MUX).

Each of the plurality of waveguides may be coupled to the wavelength MUX.

The wavelength DEMUX may be arranged so as to demultiplex the received series of laser pulses onto the plurality of waveguides, wherein the magnitudes of the lengths of the respective waveguides may be such that the laser pulses that are coupled into the wavelength MUX are coupled out from the wavelength MUX at the same time such that the laser pulses that are output from the first optical delay module overlap or substantially overlap each other.

For example, output optical fiber ports of the wavelength DEMUX may be spliced to input optical fiber ports of the wavelength MUX. In the case where the wavelength DEMUX has one input port and N output optical fiber ports, where N is the number of laser pulses or wavelength channels that are used in the laser pulse train generated in the laser pulse generator of the optical system's transmitter, all N laser pulses may overlap in the output optical fiber port of the wavelength MUX.

The overlapped laser pulses in the output optical fiber port of the wavelength MUX may then be coupled into or impinge on a photosensor unit such as at least one photodiode in the optical system's receiver. Thereby, a received signal may be generated which may be further processed e.g. for performing EDM.

The receiver may comprise an optical amplifier adapted to amplify the received series of laser pulses prior to them being input to the first optical delay module. The optical amplifier may for example comprise a doped fiber amplifer (DFA).

The transmitter may comprise a second optical delay module adapted to delay the amplified laser pulses and/or laser pulses generated by the laser pulse generator based on the wavelength of the respective laser pulses such that the magnitudes of delays corresponding to different sub-series of laser pulses having wavelengths within different wavelength sub-bands are different.

The second optical delay module may be arranged such that the magnitudes of delays corresponding to different sub-series of laser pulses having wavelengths within different wavelength sub-bands are such that the laser pulses are output from the second optical delay module such that the sub-series of laser pulses having wavelengths in different wavelength sub-bands overlap or substantially overlap each other.

By means of the second optical delay module, the amplified laser pulses and/or laser pulses generated by the laser pulse generator having different wavelengths can be spectrally combined in the transmitter of the optical system.

Thereby, the peak power of the laser pulses transmitted towards the target or object may be increased. For N amplified laser pulses and/or laser pulses generated by the laser pulse generator, the overlapping of M sub-series of laser pulses having wavelengths in different wavelength sub-bands may result in M times increased peak power of the laser pulses transmitted towards the target.

Providing an optical delay module both in the transmitter and in the receiver may facilitate manufacture of the optical system, particularly in case the laser pulse generator is adapted to generate a train of laser pulses including a relatively large number of laser pulses. This is due to that in order to delay a relatively large number of laser pulses, relatively long waveguides such as optical fibers may be required. Arranging or installing relatively long waveguides in the optical system may be difficult. However, by providing an optical delay module both in the transmitter and in the receiver, the total length of the waveguides that is required may be 'split' between the transmitter and the receiver, which may facilitate installation of the waveguides in the optical system for the implementation of the optical delay modules.

The second optical delay module may comprise a wavelength DEMUX and a plurality of waveguides.

Each of the plurality of waveguides may correspond to one of the wavelength sub-bands.

Each of the plurality of waveguides may have a predefined length.

The wavelength DEMUX may be arranged so as to demultiplex the series of laser pulses received by the second optical delay module onto the plurality of waveguides, wherein the magnitudes of the lengths of the respective waveguides may be such that the sub-series of laser pulses are coupled out from the plurality of waveguides at the same time, so that the sub-series of laser pulses having wavelengths within different wavelength sub-bands that are output from the second optical delay module overlap each other.

The second optical delay module may comprise a wavelength MUX.

Each of the plurality of waveguides may be coupled to the wavelength MUX.

The wavelength DEMUX may be arranged so as to demultiplex the received series of laser pulses onto the plurality of waveguides, wherein the magnitudes of the lengths of the respective waveguides are such that the sub-series of laser pulses that are coupled into the wavelength MUX are coupled out from the wavelength MUX at the same time such that the sub-series of laser pulses that are output from the second optical delay module overlap each other.

The first optical delay module may comprise a wavelength demultiplexer and a plurality of waveguides.

Each of the plurality of waveguides may correspond to one of the wavelengths of the received overlapped sub-series of laser pulses.

Each of the plurality of waveguides may have a predefined length.

The demultiplexer may be arranged so as to demultiplex the received overlapped sub-series of laser pulses onto the plurality of waveguides, wherein the magnitudes of the lengths of the respective waveguides are such that the laser pulses are coupled out from the plurality of waveguides at the same time, whereby the laser pulses that are output from the first optical delay module overlap or substantially overlap each other.

The first optical delay module may comprise a wavelength multiplexer.

Each of the plurality of waveguides may be coupled to the wavelength multiplexer.

The demultiplexer may be arranged so as to demultiplex the received overlapped sub-series of laser pulses onto the plurality of waveguides, wherein the magnitudes of the lengths of the respective waveguides are such that the laser pulses that are coupled into the wavelength multiplexer are coupled out from the wavelength multiplexer at the same time such that the laser pulses that are output from the first optical delay module overlap or substantially overlap each other.

The receiver may comprise an optical amplifier adapted to amplify the received overlapped sub-series of laser pulses prior to them being input to the first optical delay module.

According to a second aspect of the present invention, there is provided an optical system for distance measuring. The optical system comprises a transmitter and a receiver.

The transmitter comprises a laser pulse generator adapted to generate a series of laser pulses such that the laser pulses are delayed with respect to each other, and such that each laser pulse has a wavelength different from the wavelengths of other laser pulses of the series of laser pulses, or such that at least some of the laser pulses have a wavelength different from the wavelengths of other laser pulses of the series of laser pulses.

The transmitter may comprise an optical amplifier adapted to amplify laser pulses generated by the laser pulse generator having wavelengths within a predefined wavelength band.

The transmitter comprises an optical delay module adapted to delay the amplified laser pulses and/or laser pulses generated by the laser pulse generator based on the wavelength of the respective laser pulses such that the magnitudes of delays of laser pulses having different wavelengths are different. The optical delay module is arranged such that the magnitudes of delays corresponding to different wavelengths are such that the laser pulses that are output from the optical delay module, or at least some of the laser pulses that are output from the first optical delay module, overlap each other.

The transmitter is adapted to transmit the laser pulses towards a target or object.

The receiver is adapted to receive a laser pulses having been generated by reflection and/or scattering of the laser pulses transmitted by the transmitter from the target or object, respectively.

By means of the optical delay module in the transmitter, the amplified laser pulses and/or laser pulses generated by the laser pulse generator having different wavelengths can be spectrally combined in the transmitter of the optical system.

By amplification of laser pulses generated by the laser pulse generator that are delayed in respect to each other, nonlinear effects and nonlinear pulse distortions may be mitigated or even eliminated.

By the spectral combination of the amplified laser pulses and/or laser pulses generated by the laser pulse generator, resulting in overlapping of the laser pulses output from the optical delay module in the transmitter, the received signal peak power and the signal-to-noise ratio in the receiver may be increased.

Thereby, the peak power of the laser pulse transmitted towards the target or object may be increased. For example for N amplified laser pulses and/or laser pulses generated by the laser pulse generator, the overlapping of the laser pulses having different wavelengths may result in N times increased peak power of the laser pulse transmitted towards the target or object.

Thereby, increased peak power of the received signal at the receiver may be achieved, possibly allowing the operating range of the optical system to be increased, whereby the optical system may become capable of measuring larger distances between the optical system and the target or object, corresponding to higher losses of the signal during the return trip from the optical system to the object or target and back to the optical system.

Hence, the optical systems according to the first and second aspects of the present invention, respectively, may provide alternative solutions to the same problem of how to alleviate or eliminate restrictions of the operating range for EDM related to fiber non-linearity and/or how to alleviate or eliminate restrictions on signal-to-noise ratio achievable in the receiver part of the optical system related to fiber non-linearity.

The optical delay module may comprise a wavelength demultiplexer and a plurality of waveguides.

Each of the plurality of waveguides may correspond to one of the wavelengths of the received series of laser pulses.

Each of the plurality of waveguides may have a predefined length.

The demultiplexer may be arranged so as to demultiplex the received series of laser pulses onto the plurality of waveguides, wherein the magnitudes of the lengths of the respective waveguides are such that the laser pulses are coupled out from the plurality of waveguides at the same time, whereby the laser pulses that are output from the optical delay module overlap or substantially overlap each other.

The optical delay module may comprise a wavelength multiplexer.

Each of the plurality of waveguides may be coupled to the wavelength multiplexer.

The demultiplexer may be arranged so as to demultiplex the received series of laser pulses onto the plurality of waveguides, wherein the magnitudes of the lengths of the respective waveguides are such that the laser pulses that are coupled into the wavelength multiplexer are coupled out from the wavelength multiplexer at the same time such that the laser pulses that are output from the optical delay module overlap or substantially overlap each other.

The receiver may comprise an optical amplifier adapted to amplify the received laser pulses.

The laser pulse generator may for example comprise a wavelength tunable laser or wavelength tunable laser source (TLS).

By means of a TLS, a series of laser pulses being delayed with respect to each other, at least some of the laser pulses having respective wavelengths different from the wavelengths of other laser pulses of the series of laser pulses, can be generated.

The TLS may for example comprise a semiconductor laser that is designed in a distributed Bragg reflector (DBR) configuration. The operating wavelength of the TLS, and hence the wavelength of a laser pulse generated by the TLS, can be tuned to a specified value, or channel, by applying electrical currents to the Bragg grating and phase-tuning sections of the DBR laser cavity while maintaining the operation in single-mode regime. Since the wavelength of the TLS is tuned electrically, and not e.g. thermally, the wavelength of the TLS may be adjusted or tuned within a nanosecond or less.

The TLS may be operated in such a way that a specified number N of laser pulses, each laser pulse having a specified wavelength *λᵢ*, *i*=1, 2, ..., N, are generated during each period of the laser pulse train.

The wavelengths *λᵢ*, *i*=1, 2, ..., N, may for example be the wavelength values in a standard wavelength division multiplexing (WDM) ITU grid.

Alternatively or optionally, the laser pulse generator may comprise a plurality of lasers, e.g. distributed feedback (DFB) lasers, wherein each laser of the plurality of lasers is adapted to generate laser pulses having different wavelengths with respect to laser pulses generated by the other lasers. The laser pulse generator may comprise a combiner adapted to combine the laser pulses generated by the plurality of lasers into an optical output beam and/or a waveguide.

According to another example, the laser pulse generator may comprise a plurality of lasers, e.g. DFB lasers, where each laser is adapted to generate laser pulses having different wavelengths with respect to laser pulses generated by the other lasers, and a wavelength tunable laser or TLS. The wavelength tunable laser or TLS is hence separate from the plurality of lasers. The laser pulse generator may comprise a combiner adapted to combine the laser pulses generated by the plurality of lasers, and possibly also laser pulses generated by the wavelength tunable laser or TLS, into an optical output beam and/or a waveguide.

In the foregoing and in the following, optical delay modules have been and are described having a functionality so as to be capable of producing an overlapping of the laser pulses being output from the respective optical delay modules. However, the present invention encompasses where the laser pulses being output from the respective optical delay modules are substantially overlapping each other and/or where most of the laser pulses being output from the respective optical delay modules overlap each other, e.g. where a predetermined fraction of the laser pulses being output from the respective optical delay modules overlap each other. The predetermined fraction may for example be 90% or more, or 95% or more, of the laser pulses being output from the respective optical delay modules overlap each other.

The laser pulses output from the respective optical delay modules which are overlapping each other may be detected. To this end, the optical system may comprise an optical signal detecting module, e.g. including a photosensor unit, adapted to detect the laser pulses being output from the respective optical delay modules overlapping each other.

The elapsed time from when the laser pulses are transmitted towards the target or object to when the laser pulses output from the respective optical delay modules which are overlapping each other are detected may be measured. To this end, the optical system may comprise a time measuring module adapted to measure the elapsed time from when the laser pulses are transmitted by the transmitter to when the laser pulses output from the respective optical delay modules which are overlapping each other are detected by the optical signal detecting module.

Based on the elapsed time, the distance between the target or object and the optical system may be determined, e.g. by means of a processing unit.

According to a third aspect of the present invention, there is provided a method for transmitting laser pulses and receiving laser pulses.

The method comprises generating a series of laser pulses such that the laser pulses are delayed with respect to each other, and such that each laser pulse has a wavelength different from the wavelengths of other laser pulses of the series of laser pulses, or such that at least some of the laser pulses have a wavelength different from the wavelengths of other laser pulses of the series of laser pulses.

Generated laser pulses having wavelengths within a predefined wavelength band may be amplified.

The laser pulses are transmitted towards a target or object.

A series of laser pulses having been generated by reflection and/or scattering of the laser pulses from the target or object, respectively, is received.

Laser pulses that have been received are delayed based on the wavelength of the respective laser pulses, wherein the magnitudes of delays of laser pulses having different wavelengths are different, and the magnitudes of delays corresponding to different wavelengths are such so as to cause overlapping or near overlapping of the laser pulses or at least some of the laser pulses with respect to each other.

Amplified laser pulses and/or generated laser pulses in the series of laser pulses may be delayed based on the wavelength of the respective laser pulses, such that the magnitudes of delays corresponding to different sub-series of laser pulses having wavelengths within different wavelength sub-bands are different, wherein the magnitudes of delays corresponding to different sub-series of laser pulses having wavelengths within different wavelength sub-bands are such so as to cause the sub-series of laser pulses having wavelengths in different wavelength sub-bands to overlap or substantially overlap each other.

According to a fourth aspect of the present invention, there is provided a method for transmitting laser pulses and receiving laser pulses.

The method comprises generating a series of laser pulses such that the laser pulses are delayed with respect to each other and such that each laser pulse has a wavelength different from the wavelengths of other laser pulses of the series of laser pulses, or such that at least some of the laser pulses have a wavelength different from the wavelengths of other laser pulses of the series of laser pulses.

Generated laser pulses having wavelengths within a predefined wavelength band may be amplified.

Laser pulses are delayed based on the wavelength of the respective laser pulses, wherein the magnitudes of delays of laser pulses having different wavelengths are different, and the magnitudes of delays corresponding to different wavelengths are such so as to cause overlapping or near overlapping of the laser pulses or at least some of the laser pulses with respect to each other.

The laser pulses are transmitted towards a target or object.

A series of laser pulses having been generated by reflection and/or scattering of the laser pulses from the target or object, respectively, is received.

According to a fifth aspect of the present invention, there is provided a computer program product adapted to, when executed in a processor unit, perform a method according to the present invention.

According to a sixth aspect of the present invention, there is provided a computer-readable storage medium on which there is stored a computer program product adapted to, when executed in a processor unit, perform a method according to the present invention.

According to a seventh aspect of the present invention, there is provided a distance measuring device comprising an optical system according to the present invention.

The optical system may comprise a processing unit for controlling operation of at least one of the transmitter and the receiver of the optical system.

According to an eight aspect of the present invention, there is provided a computer program product adapted to be executed in the processing unit of the optical system. The computer program product comprises computer-readable means carrying computer program code. The computer program code is configured to, when executed in the processing unit of the optical system, cause the transmitter to generate a series of laser pulses such that the laser pulses are delayed with respect to each other, and such that each laser pulse has a wavelength different from the wavelengths of other laser pulses of the series of laser pulses, or such that at least some of the laser pulses have a wavelength different from the wavelengths of other laser pulses of the series of laser pulses. The computer program code may be configured to, when executed in the processing unit of the optical system, cause the optical amplifier to amplify generated laser pulses having wavelengths within a predefined wavelength band. The computer program code is configured to, when executed in the processing unit of the optical system, cause the transmitter to transmit the laser pulses towards a target or object. The computer program code is configured to, when executed in the processing unit of the optical system, cause the receiver to receive a series of laser pulses having been generated by reflection and/or scattering of the laser pulses from the target or object, respectively. The computer program code is configured to, when executed in the processing unit of the optical system, cause the optical delay module in the receiver to delay laser pulses that have been received based on the wavelength of the respective laser pulses, wherein the magnitudes of delays of laser pulses having different wavelengths are different, and the magnitudes of delays corresponding to different wavelengths are such that at least some of the laser pulses that are output from the optical delay module overlap each other. The computer program code may be configured to, when executed in the processing unit of the optical system, cause amplified laser pulses and/or generated laser pulses in the series of laser pulses to be delayed based on the wavelength of the respective laser pulses, such that the magnitudes of delays corresponding to different sub-series of laser pulses having wavelengths within different wavelength sub-bands are different, wherein the magnitudes of delays corresponding to different sub-series of laser pulses having wavelengths within different wavelength sub-bands are such so as to cause the sub-series of laser pulses having wavelengths in different wavelength sub-bands to overlap or substantially overlap each other.

According to a ninth aspect of the present invention, there is provided a computer program product adapted to be executed in the processing unit of the optical system. The computer program product comprises computer-readable means carrying computer program code. The computer program code is configured to, when executed in the processing unit of the optical system, cause the transmitter to generate a series of laser pulses such that the laser pulses are delayed with respect to each other and such that each laser pulse has a wavelength different from the wavelengths of other laser pulses of the series of laser pulses, or such that at least some of the laser pulses have a wavelength different from the wavelengths of other laser pulses of the series of laser pulses. The computer program code may be configured to, when executed in the processing unit of the optical system, cause the optical amplifier to amplify generated laser pulses having wavelengths within a predefined wavelength band. The computer program code is configured to, when executed in the processing unit of the optical system, cause the optical delay module in the transmitter to delay laser pulses based on the wavelength of the respective laser pulses, wherein the magnitudes of delays of laser pulses having different wavelengths are different, and the magnitudes of delays corresponding to different wavelengths are such that at least some of the laser pulses that are output from the optical delay module overlap each other. The computer program code is configured to, when executed in the processing unit of the optical system, cause the transmitter to transmit the laser pulses towards a target or object. The computer program code is configured to, when executed in the processing unit of the optical system, cause the receiver to receive a series of laser pulses having been generated by reflection and/or scattering of the laser pulses from the target or object, respectively.

The processing unit may include or be constituted by any suitable central processing unit (CPU), microcontroller, digital signal processor (DSP), Application Specific Integrated Circuit (ASIC), Field Programmable Gate Array (FPGA), etc., or any combination thereof. The processing unit may optionally be capable of executing software instructions stored in a computer program product e.g. in the form of a memory. The memory may for example be any combination of read and write memory (RAM) and read only memory (ROM). The memory may comprise persistent storage, which for example can be a magnetic memory, an optical memory, a solid state memory or a remotely mounted memory, or any combination thereof.

In the context of the present application, by an optical amplifier it is meant a device that can amplify an optical signal without the need to first convert the optical signal to an electrical signal.

In the context of the present application, by a DFA it is meant an optical amplifier which utilizes a doped optical fiber as a gain medium to amplify an optical signal.

For example, the doped optical fiber of the DFA may be doped with at least one rare-earth element such as Er, Yb, Nd and/or Tm.

Further objects and advantages of the present invention are described in the following by means of exemplifying embodiments.

It is noted that the present invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### Brief description of the drawings

Exemplifying embodiments of the invention will be described below with reference to the accompanying drawings, in which:
Fig. 1 is a schematic block diagram of a prior art optical system for electronic distance measuring (EDM);
Figs. 2-4 are schematic block diagrams of optical systems for EDM according to embodiments of the present invention;
Fig. 5 are graphs illustrating generation of a series of laser pulses in accordance with an embodiment of the present invention;
Figs. 6 and 7 are schematic flow diagrams of methods of transmitting and receiving laser pulses according to embodiments of the present invention;
Fig. 8 is a schematic view of a computer-readable storage medium according to an embodiment of the present invention;
Fig. 9 is a schematic block diagram of a distance measuring device according to an embodiment of the present invention; and
Fig. 10 is a schematic block diagram of a laser pulse generator in accordance with an embodiment of the present invention.

### Detailed description

The present invention will now be described hereinafter with reference to the accompanying drawings, in which exemplifying embodiments of the present invention are shown. The present invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to like or similar elements or components throughout. The steps of any method disclosed herein do not have to be performed in the exact order disclosed, unless explicitly stated.

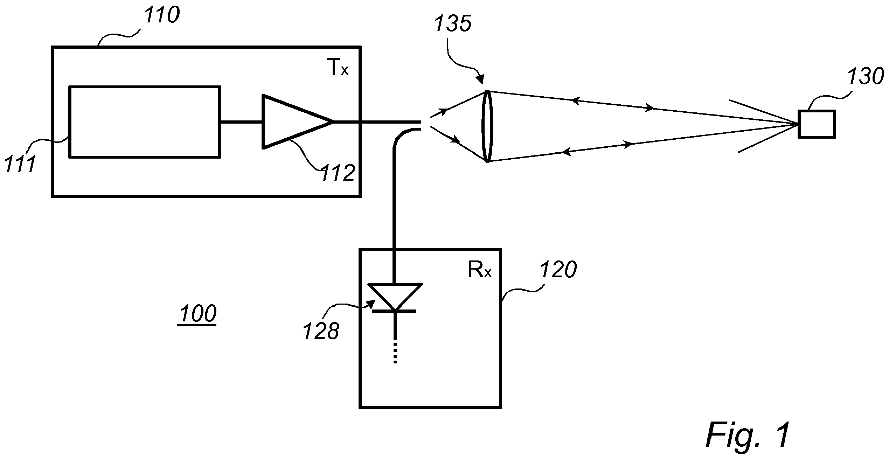

Referring now to Fig. 1, there is shown a schematic block diagram of a prior art optical system 100 for electronic distance measuring (EDM).

The optical system 100 comprises a transmitter 110 and a receiver 120, also denoted by "Tx" and "Rx", respectively. The transmitter 110 includes a 'seed' laser 111 that is constituted by a semiconductor laser, for example in distributed feedback (DFB) configuration, that generates laser pulses at a specified wavelength, and an erbium-doped fiber amplifier (EDFA) 112 that amplifies the laser pulses generated by the seed laser 111. The seed laser 111 is driven by a pulsed electrical current having a specified repetition rate. The seed laser 111 and the EDFA 112 are optically coupled via an optical fiber. The amplified laser pulses are then transmitted towards a target or object 130 via optical component 135, e.g. comprising at least one lens, etc. Laser pulses reflected off the target or object 130 are received by the receiver 120 which includes a photodiode 128 and possibly also further signal processing components. The photodiode 128 converts the laser pulses to received signals.

Based on an elapsed time as determined e.g. from emission of a laser pulse from the transmitter 110 to receipt of a received signal by the receiver's 120 photodiode 128, a distance between the optical system 100 and the target or object 130 can subsequently be determined.

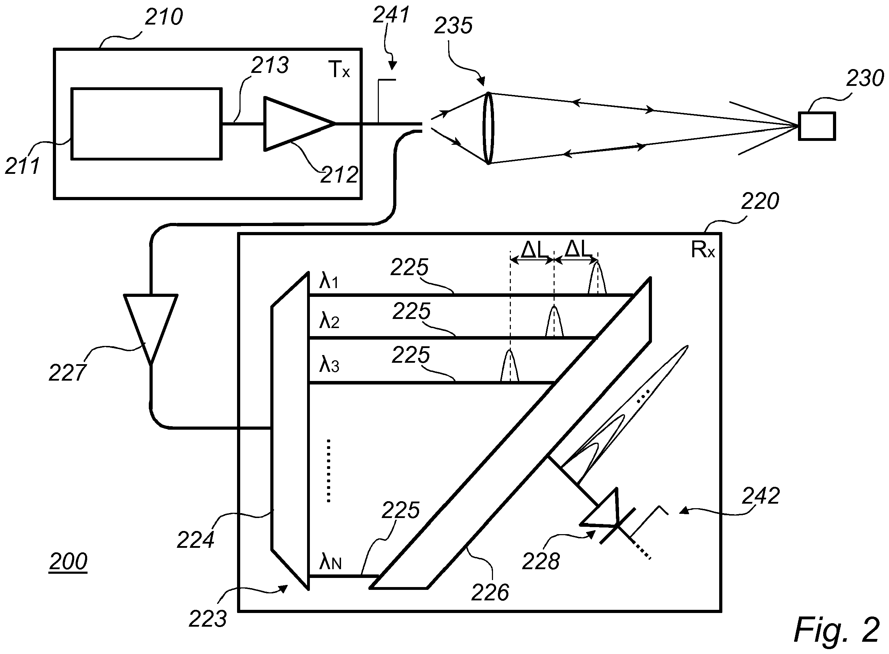

Referring now to Fig. 2, there is shown a schematic block diagram of an optical system 200 for EDM according to an embodiment of the present invention.

The optical system 200 comprises a transmitter 210 and a receiver 220, also denoted by "Tx" and "Rx", respectively.

The transmitter 210 comprises a laser pulse generator 211 constituted by a wavelength tunable laser source (TLS). The TLS 211 is adapted to generate a series of laser pulses such that the laser pulses are delayed with respect to each other and such that each laser pulse has a wavelength different from the wavelengths of other laser pulses of the series of laser pulses.

The TLS 211 may for example comprise a semiconductor laser designed in a distributed Bragg reflector (DBR) configuration. The operating wavelength of the TLS 211, and hence the wavelength of a laser pulse generated by the TLS 211, can be tuned to a specified value, or channel, by applying electrical currents to the Bragg grating(s) and/or phase-tuning sections of the DBR laser cavity. Since the wavelength of the TLS 211 can be tuned electrically, and not e.g. thermally, the wavelength of the TLS 211 may be adjusted or tuned within a nanosecond or less.

The TLS 211 may be operated in such a way that a specified number N of laser pulses, each laser pulse having a specified wavelength *λᵢ*, *i*=1, 2, ..., N, are generated during each period *T*₀ of the series of laser pulses or laser pulse train. The wavelengths *λᵢ*, *i*=1, 2, ..., N, may for example be the wavelength values in a standard wavelength division multiplexing (WDM) ITU grid.

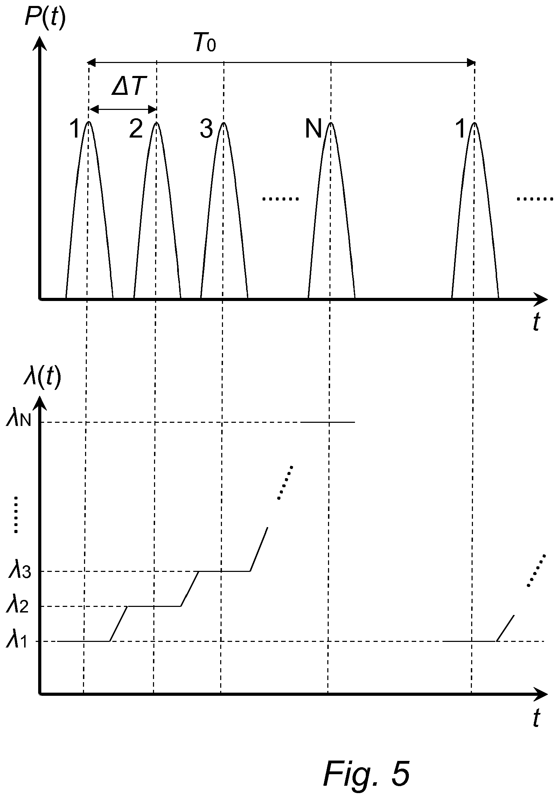

The generation of the series of laser pulses is illustrated in the graphs in Fig. 5. The upper graph in Fig. 5 is a graph of laser pulse power *P*(*t*) as a function of time *t*, showing laser pulses in a series of laser pulses or laser pulse train separated in time by *ΔT* and having wavelengths *λᵢ*, *i*=1, 2, ..., N, during period *T*₀. Both *P*(*t*) and t are given in arbitrary units. Also shown in the upper graph of Fig. 5 is the first laser pulse in a series of laser pulses during the subsequent period of the laser pulse train. The lower graph in Fig. 5 is a graph of the wavelengths *λ*(*t*)=*λᵢ*, *i*=1, 2, ..., N, during period *T*₀ as a function of time *t.* Both *λ*(*t*) and *t* are given in arbitrary units. As can be seen in the lower graph in Fig. 5, the wavelengths *λᵢ*, *i*=1, 2, ..., N, monotonously increase with increasing time *t* during period *T*₀. Such a variation of the wavelengths *λᵢ*, *i*=1, 2, ..., N, relatively to each other during period *T*₀ is according to an example. In principle, any sort of variation of the wavelengths *λᵢ*, *i*=1, 2, ..., N, relatively to each other is possible, as long as all or most wavelengths *λᵢ*, *i*=1, 2, ..., N, differ with respect to each other.

Alternatively or optionally, the wavelength of the TLS 211 can be swept at a certain frequency or frequencies across a predefined wavelength tuning range.

The transmitter 210 and/or laser pulse generator 211 or TLS 211 may comprise a laser driver (not shown in Fig. 2). The laser driver may be adapted to supply a driving current to the TLS 211 so as to generate series of laser pulses such as described in the foregoing. The laser driver may for example be based on direct current (DC) modulation or external modulation, e.g. involving optical intensity modulator.

The transmitter 210 comprises an optical amplifier 212 constituted by an erdium-doped fiber amplifer (EDFA). Alternatively or optionally, the optical amplifier 212 may comprise a doped fiber amplifier doped with one or several rare-earth elements. The EDFA 212 is adapted to amplify laser pulses generated by the TLS 211 having wavelengths within a predefined wavelength band. The optical amplifier or EDFA 212 is optional and may be omitted.

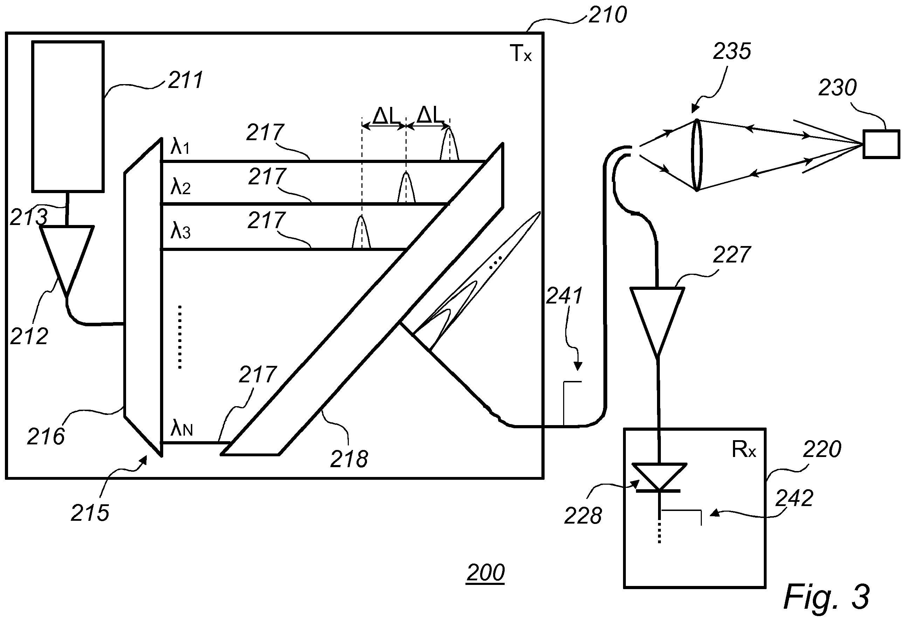

The TLS 211 and the EDFA 212 may for example be optically coupled by means of an optical fiber 213 or fibers or another type of waveguide or waveguides. Any coupling between components of the system 200 in Fig. 2, as well as in Figs. 3, 4, 9 and 10, e.g. between components in the transmitter 210 and/or in the receiver 220, may for example be achieved by means of an optical fiber or optical fibers.

The transmitter 210 is adapted to transmit the generated laser pulses and/or amplified laser pulses towards a target or object 230. According to the embodiment depicted in Fig. 2, the laser pulses are transmitted via optical component 235, e.g. comprising at least one lens and/or collimation means, etc.

The receiver 220 is adapted to receive a series of laser pulses, which have been generated by reflection and/or scattering of the laser pulses transmitted by the transmitter 210 from the target or object 230, respectively.

The receiver 220 comprises an optical delay module 223 adapted to delay laser pulses based on the wavelength of the respective laser pulses such that the magnitudes of delays of laser pulses having different wavelengths are different. The optical delay module 223 is arranged such that the magnitudes of delays corresponding to different wavelengths are such that the laser pulses that are output from the first optical delay module 223 overlap each other.

According to the embodiment depicted in Fig. 2, the optical delay module 223 comprises a wavelength demultiplexer (DEMUX) 224, a plurality of waveguides 225, and a wavelength multiplexer (MUX) 226.

The waveguides 225 may for example comprise optical fibers.

Each waveguide 225 of the plurality of waveguides 225 corresponds to one of the wavelengths of the received series of laser pulses, and each waveguide 225 of the plurality of waveguides 225 has a predefined length and is coupled to the wavelength MUX 226.

The wavelength DEMUX 224 is arranged so as to demultiplex the received series of laser pulses onto the plurality of waveguides 225, as indicated in Fig. 2 by the respective waveforms of laser pulses on the waveguides 225, and wherein the magnitudes of the lengths of the respective waveguides 225 are such that the laser pulses that are coupled into the wavelength MUX 226 are coupled out from the wavelength MUX 226 at the same time such that the laser pulses that are output from the optical delay module 223 overlap each other, as indicated in Fig. 2 at the output of wavelength MUX 226.

For example, the wavelength DEMUX 224 may be based on an array waveguide grating (AWG).

According to the example depicted in Fig. 2, the wavelength DEMUX 224 includes one input port and N output optical fiber ports, where N is the number of wavelength channels that are used during one period *T*₀ of the series of laser pulses or laser pulse train. At the output of the wavelength DEMUX 224, each laser pulse of the N laser pulses will end up in a separate optical fiber port. The time position of the laser pulse in each output optical fiber port is related to its wavelength channel, i.e. to the wavelength of the respective laser pulse. For example, as illustrated in Fig. 2, if the wavelength of the first laser pulse in the series of laser pulse is set to λ₁ and the wavelength of each next pulse during the laser pulse train period is increased by Δλ up to λ_{N} for the final laser pulse in the period (Δλ being the wavelength channel spacing), the laser pulse in the second output optical fiber port (corresponding to wavelength λ₂) will be delayed with respect to the laser pulse in the first output optical fiber port by a distance Δ*L*=v_{g}·Δ*T*, where Δ*T* is the time delay between the laser pulses in the first and second optical fiber ports, v_{g} is the group velocity of light in the optical fibers. The laser pulse in the third output optical fiber port will be delayed with respect to the laser pulse in the first output optical fiber port by a distance 2·Δ*L*, and so on.

In some applications, Δλ may for example be about 0.4 nm or be a wavelength value included in the range 0.05-0.8 nm.

The wavelengths λ₁, λ₂, λ₃, ..., λ_{N}, may for example be wavelengths in an interval including 1.55 µm, and possibly be 'centered' on or distributed about 1.55 µm or another wavelength value in the range 1.5 µm-2 µm, e.g. for eye safety reasons.

According to the embodiment depicted in Fig. 2, the optical system 200 comprises an optical amplifier 227 adapted to amplify the received series of laser pulses prior to them being input to the optical delay module 223. The optical amplifier 227 may for example comprise a doped fiber amplifier doped with one or more rare-earth elements, such as an EDFA. Alternatively, the optical amplifier 227 may be arranged in the receiver 220. The optical amplifier 227 is optional and may be omitted.

The optical delay module 223 and the optical amplifier 227 may for example be optically coupled by means of an optical fiber or fibers or another type of waveguide or waveguides.

The receiver 220 comprises a photosensor unit 228, e.g. one or more photodiodes such as depicted in Fig. 2 and/or a charge-coupled device (CCD), adapted to receive the overlapped laser pulses that are output from the optical delay module 223 and convert these laser pulses to a received signal, e.g. for subsequent processing for determining a distance between the optical system 200 and the target or object 230.

The optical system 200 comprises a time measuring module adapted to measure the elapsed time from when the laser pulses are transmitted by the transmitter 210 to detection of the laser pulses in the receiver 220. The time measuring module comprises a first clock line 241 adapted to sense when the laser pulses are transmitted by the transmitter 210, and a second clock line 242 adapted to sense when the overlapping laser pulses output from the optical delay module 223 have been received by the photosensor unit 228. Based on the elapsed time, a distance between the optical system 200 and the target or object 230 may be determined.

Referring now to Fig. 3, there is shown a schematic block diagram of an optical system 200 for EDM according to another embodiment of the present invention.

The optical system 200 comprises a transmitter 210 and a receiver 220, also denoted by "Tx" and "Rx", respectively.

The transmitter 210 comprises a laser pulse generator 211 and an optical amplifier 212. The laser pulse generator 211 and the optical amplifier 212 may for example be optically coupled by means of an optical fiber or fibers or another type of waveguide or waveguides. The laser pulse generator 211 and the optical amplifier 212 may be similar to or the same as laser pulse generator 211 and optical amplifier 212, respectively, described with reference to Fig. 2, and the function of laser pulse generator 211 and optical amplifier 212 may be similar to or the same as the function of laser pulse generator 211 and optical amplifier 212, respectively, described with reference to Fig. 2.

The transmitter 210 comprises an optical delay module 215 adapted to delay laser pulses generated by laser pulse generator 211 and/or amplified laser pulses based on the wavelength of the respective laser pulses such that the magnitudes of delays of laser pulses having different wavelengths are different. The optical delay module 215 is arranged such that the magnitudes of delays corresponding to different wavelengths are such that the laser pulses that are output from the optical delay module 215 overlap each other.

The optical delay module 215 comprises a wavelength DEMUX 216, a plurality of waveguides 217, and a wavelength MUX 218.

Each waveguide 217 of the plurality of waveguides 217 corresponds to one of the wavelengths of the laser pulses. Each of the plurality of waveguides 217 has a predefined length, and is coupled to the wavelength MUX 218. The waveguides 217 may for example comprise optical fibers.

The wavelength DEMUX 216 is arranged so as to demultiplex the laser pulses onto the plurality of waveguides 217, as indicated in Fig. 3 by the respective waveforms of laser pulses on the waveguides 217, and wherein the magnitudes of the lengths of the respective waveguides 217 are such that the laser pulses that are coupled into the wavelength MUX 218 are coupled out from the wavelength MUX 218 at the same time such that the laser pulses that are output from the optical delay module 215 overlap each other, as indicated in Fig. 3 at the output of wavelength MUX 218.

The optical amplifier 212 is optional and may be omitted. Laser pulses generated by the laser pulse generator 211 may be directly coupled into the optical delay module 215.

The transmitter 210 is adapted to transmit the laser pulses towards a target or object 230. According to the embodiment depicted in Fig. 3, the laser pulses are transmitted towards the target or object 230 via optical component 235, e.g. comprising at least one lens and/or collimation means, etc.

Thereby, the peak power of the laser pulse transmitted towards the target or object 230 may be increased. For N amplified laser pulses and/or laser pulses generated by the laser pulse generator 211, the overlapping of the laser pulses having different wavelengths may result in N times increased peak power of the laser pulse transmitted towards the target.

The receiver 220 is adapted to receive a series of laser pulses, which have been generated by reflection and/or scattering of the laser pulses transmitted by the transmitter 210 from the target or object 230, respectively.

The optical system 200 comprises an optical amplifier 227 such as described with reference to Fig. 2. The optical amplifier 227 is optional and may be omitted.

The receiver 220 comprises a photosensor unit 228 such as described with reference to Fig. 2.

The optical system 200 comprises a first clock line 241 and a second clock line 242 such as described with reference to Fig. 2.

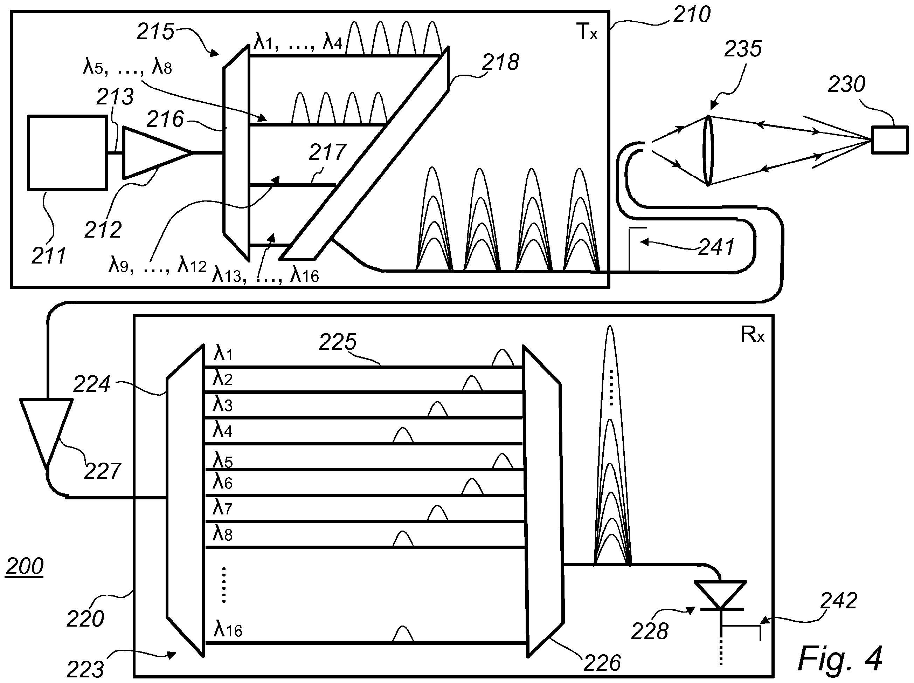

Referring now to Fig. 4, there is shown a schematic block diagram of an optical system 200 for EDM according to an embodiment of the present invention.

The optical system 200 comprises a transmitter 210 and a receiver 220, also denoted by "Tx" and "Rx", respectively.

The transmitter 210 comprises a laser pulse generator 211 and an optical amplifier 212. The laser pulse generator 211 and the optical amplifier 212 may for example be optically coupled by means of an optical fiber or fibers or another type of waveguide or waveguides. The laser pulse generator 211 and the optical amplifier 212 may be similar to or the same as laser pulse generator 211 and optical amplifier 212, respectively, described with reference to Fig. 2, and the function of laser pulse generator 211 and optical amplifier 212 may be similar to or the same as the function of laser pulse generator 211 and optical amplifier 212, respectively, described with reference to Fig. 2. The optical amplifier 212 is optional and may be omitted.

The transmitter 210 comprises an optical delay module 215 adapted to delay laser pulses generated by laser pulse generator 211 and/or amplified laser pulses based on the wavelength of the respective laser pulses such that the magnitudes of delays corresponding to different sub-series of laser pulses having wavelengths within different wavelength sub-bands are different. The optical delay module 215 is arranged such that the magnitudes of delays corresponding to different sub-series of laser pulses having wavelengths within different wavelength sub-bands are such that the laser pulses are output from the optical delay module 215 such that the sub-series of laser pulses having wavelengths in different wavelength sub-bands overlap each other.

The transmitter 210 is adapted to transmit the laser pulses towards a target or object 230. According to the embodiment depicted in Fig. 4, the laser pulses are transmitted towards the target or object 230 via optical component 235, e.g. comprising at least one lens and/or collimation means, etc.

The receiver 220 is adapted to receive a series of laser pulses having been generated by reflection and/or scattering of the laser pulses transmitted by the transmitter 210 from the target or object 230, respectively.

The optical system 200 comprises an optical amplifier 227 adapted to amplify the received series of laser pulses prior to them being input to the optical delay module 223. The optical amplifier 227 may for example comprise a doped fiber amplifier doped with one or more rare-earth elements, such as an EDFA. Alternatively, the optical amplifier 227 may be arranged in the receiver 220. The optical amplifier 227 is optional and may be omitted.

The optical delay module 223 and the optical amplifier 227 may for example be optically coupled by means of an optical fiber or fibers or another type of waveguide or waveguides.

The receiver 220 comprises a photosensor unit 228 such as described with reference to Fig. 2.

The receiver 220 comprises an optical delay module 223 adapted to delay laser pulses based on the wavelength of the respective laser pulses such that the magnitudes of delays of laser pulses having different wavelengths are different. The optical delay module 223 is arranged such that the magnitudes of delays corresponding to different wavelengths are such that the laser pulses that are output from the optical delay module 223 overlap each other.

Hence, as illustrated in Fig. 4, spectral combination of laser pulses can be employed in both the transmitter 210 and the receiver 220 of the optical system 200. As illustrated in Fig. 4, the optical system 200 utilizes N=16 dense WDM (DWDM) channels or wavelength bands and M=4 course WDM (CWDM) wavelength bands. CWDM wavelength DEMUX and MUX devices are used in the transmitter 210 for a first stage of spectral combination of laser pulses. A second stage of the spectral combination of laser pulses is performed in the receiver 220 using DWDM wavelength DEMUX and MUX devices. According to the example depicted in Fig. 4, N=16 and M=4. However, these values of N and M are merely according to an example - the present invention encompasses in principle any integer number of N and M with M being less than N.

The optical delay module 215 in the transmitter 210 comprises a wavelength DEMUX 216 and a plurality of waveguides 217. Only one waveguide 217 is indicated by reference numeral in Fig. 4. Each of the plurality of waveguides 217 corresponds to one of the wavelength sub-bands. Each of the plurality of waveguides 217 has a predefined length. The optical delay module 215 comprises a wavelength MUX 218, wherein each of the plurality of waveguides 217 is coupled to the wavelength MUX 218. The waveguides 217 may for example comprise optical fibers.

The wavelength DEMUX 216 is arranged so as to demultiplex the received series of laser pulses onto the plurality of waveguides 217 and wherein the magnitudes of the lengths of the respective waveguides 217 are such that the sub-series of laser pulses that are coupled into the wavelength MUX 218 are coupled out from the wavelength MUX 218 at the same time such that the sub-series of laser pulses that are output from the optical delay module 215 overlap each other.

The optical delay module 223 in the receiver 220 comprises a wavelength DEMUX 224, a plurality of waveguides 225, and a wavelength MUX 226. The waveguides 225 may for example comprise optical fibers. Only one of the waveguides 225 is indicated by reference numeral in Fig. 4.

Each waveguide 225 of the plurality of waveguides 225 corresponds to one of the wavelengths of the received series of laser pulses, and each waveguide 225 of the plurality of waveguides 225 has a predefined length and is coupled to the wavelength MUX 226.

The wavelength DEMUX 224 is arranged so as to demultiplex the received overlapped sub-series of laser pulses onto the plurality of waveguides 225 and wherein the magnitudes of the lengths of the respective waveguides 225 are such that the laser pulses that are coupled into the wavelength MUX 226 are coupled out from the wavelength MUX 226 at the same time such that the laser pulses that are output from the optical delay module 223 overlap each other.

The optical system 200 comprises a first clock line 241 and a second clock line 242 such as described with reference to Fig. 2.

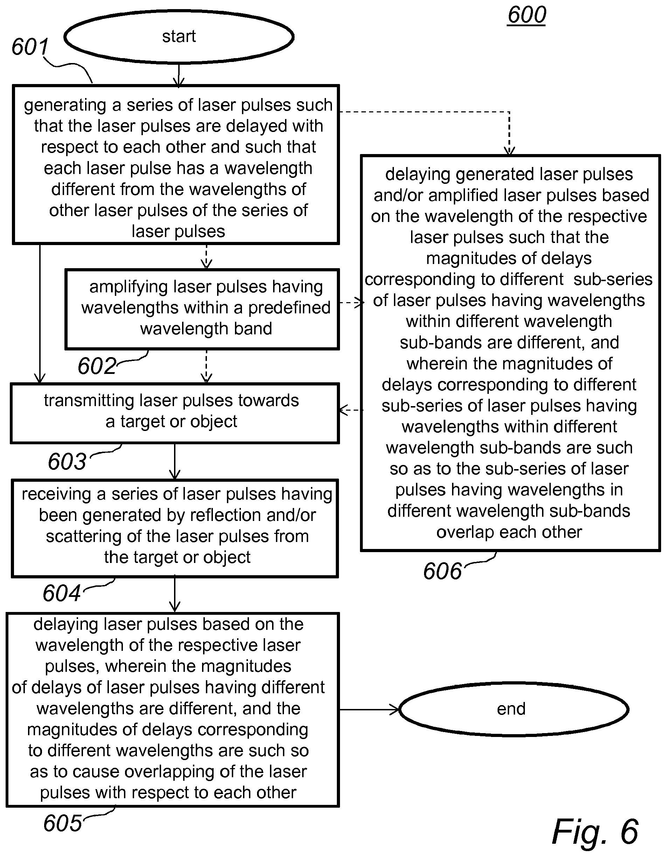

Referring now to Fig. 6, there is shown a schematic flow diagram of a method 600 of transmitting and receiving laser pulses according to an embodiment of the present invention.

The method 600 comprises generating a series of laser pulses such that the laser pulses are delayed with respect to each other and such that each laser pulse has a wavelength different from the wavelengths of other laser pulses of the series of laser pulses, 601.

Optionally, generated laser pulses having wavelengths within a predefined wavelength band are amplified, 602.

The laser pulses are transmitted towards a target or object, 603.

A series of laser pulses having been generated by reflection and/or scattering of the laser pulses from the target or object, respectively, are received, 604.

Laser pulses are delayed, 605, based on the wavelength of the respective laser pulses, wherein the magnitudes of delays of laser pulses having different wavelengths are different, and the magnitudes of delays corresponding to different wavelengths are such so as to cause overlapping of the laser pulses with respect to each other.

Optionally, the method 600 may comprise delaying generated laser pulses and/or amplified laser pulses based on the wavelength of the respective laser pulses, 606, such that the magnitudes of delays corresponding to different sub-series of laser pulses having wavelengths within different wavelength sub-bands are different, and wherein the magnitudes of delays corresponding to different sub-series of laser pulses having wavelengths within different wavelength sub-bands are such so as to the sub-series of laser pulses having wavelengths in different wavelength sub-bands overlap each other.

Dashed lines in Fig. 6 indicate optional steps.

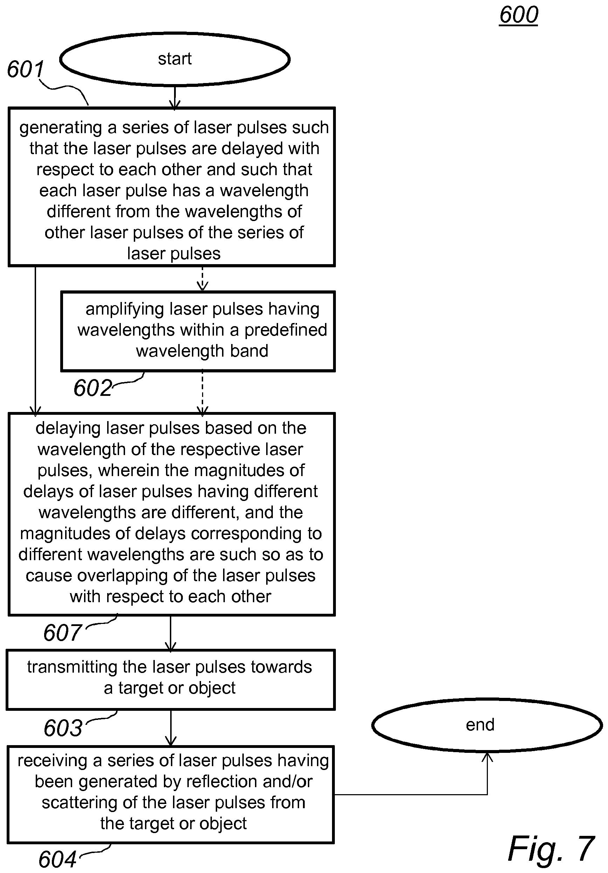

Referring now to Fig. 7, there is shown a schematic flow diagram of a method 600 of transmitting and receiving laser pulses according to an embodiment of the present invention.

The method 600 comprises generating a series of laser pulses such that the laser pulses are delayed with respect to each other and such that each laser pulse has a wavelength different from the wavelengths of other laser pulses of the series of laser pulses, 601.

Optionally, generated laser pulses having wavelengths within a predefined wavelength band are amplified, 602.

Laser pulses are delayed, 607, based on the wavelength of the respective laser pulses, wherein the magnitudes of delays of laser pulses having different wavelengths are different, and the magnitudes of delays corresponding to different wavelengths are such so as to cause overlapping of the laser pulses with respect to each other.

The laser pulses are transmitted towards a target or object, 603.

A series of laser pulses having been generated by reflection and/or scattering of the laser pulses from the target or object, respectively, are received, 604.

Dashed lines in Fig. 7 indicate optional steps.

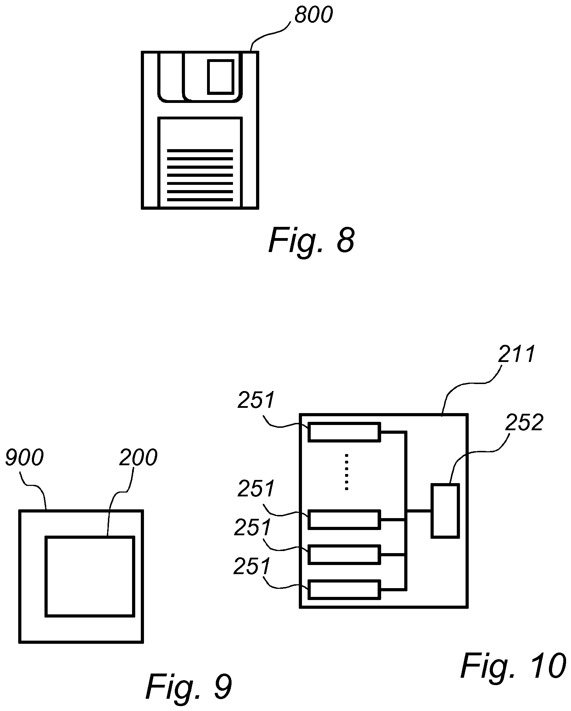

Referring now to Fig. 8, there is shown a schematic view of a computer-readable means, or computer-readable storage medium, 800 according to an embodiment of the present invention. The computer-readable storage medium 800 comprises a floppy disk. The optical system may comprise a processing unit for controlling operation of at least one of the transmitter and the receiver of the optical system. On the computer-readable storage medium 800 there is stored a computer program code which is configured to, when executed in a processing unit of an optical system according to an embodiment of the present invention, control operation of the transmitter and the receiver of the optical system.

According to one embodiment of the present invention, the computer program code is configured to, when executed in the processing unit of the optical system: cause the transmitter to generate a series of laser pulses such that the laser pulses are delayed with respect to each other, and such at least some of the laser pulses have a wavelength different from the wavelengths of other laser pulses of the series of laser pulses; cause the transmitter to transmit the laser pulses towards a target or object; cause the receiver to receive a series of laser pulses having been generated by reflection and/or scattering of the laser pulses from the target or object, respectively; and cause the first optical delay module in the receiver to delay laser pulses that have been received based on the wavelength of the respective laser pulses, wherein the magnitudes of delays of laser pulses having different wavelengths are different, and the magnitudes of delays corresponding to different wavelengths are such that at least some of the laser pulses that are output from the first optical delay module overlap each other.

According to another embodiment of the present invention, the computer program code is configured to, when executed in the processing unit of the optical system: cause the transmitter to generate a series of laser pulses such that the laser pulses are delayed with respect to each other and such that at least some of the laser pulses have a wavelength different from the wavelengths of other laser pulses of the series of laser pulses; cause the optical delay module to delay laser pulses based on the wavelength of the respective laser pulses, wherein the magnitudes of delays of laser pulses having different wavelengths are different, and the magnitudes of delays corresponding to different wavelengths are such that at least some of the laser pulses that are output from the optical delay module overlap each other; cause the transmitter to transmit the laser pulses towards a target or object; and cause the receiver to receive a series of laser pulses having been generated by reflection and/or scattering of the laser pulses from the target or object, respectively.

Although only one type of computer-readable storage medium 800 has been described above with reference to Fig. 8, the present invention encompasses embodiments employing any other suitable type of computer-readable storage medium, such as, but not limited to, a non-volatile memory, a hard disk drive, a Compact Disc (CD), a Digital Versatile Disc (DVD), a flash memory, magnetic tape, a USB stick, a Zip drive, etc.

Referring now to Fig. 9, there is shown a schematic block diagram of a distance measuring device 900 according to an embodiment of the present invention. The distance measuring device 900 comprises an optical system 200 according to an embodiment of the present invention, e.g. an optical system 200 such as has been described in the foregoing with reference to any one of Figs. 2-4.

Referring now to Fig. 10, there is shown a schematic block diagram of a laser pulse generator 211 in accordance with an embodiment of the present invention.

The laser pulse generator 211 comprises a plurality of lasers 251. Each of the lasers 251 may for example comprise a distributed feedback (DFB) laser. Each laser 251 is adapted to generate laser pulses having different wavelengths with respect to laser pulses generated by the other lasers 251.

The laser pulse generator 211 further comprises a combiner 252 adapted to combine the laser pulses generated by the plurality of lasers into an optical output beam and/or a waveguide (not shown in Fig. 10) for outputting the generated laser pulses from the laser pulse generator 211.

In conclusion, optical systems for distance measuring and methods for transmitting laser pulses and receiving laser pulses have been disclosed. The optical systems each comprise a transmitter and a receiver. According to an embodiment, the optical system comprises a laser pulse generator adapted to generate a train of laser pulses, each individual laser pulse in the train of laser pulses having a wavelength that differs from the wavelength of other laser pulses in the pulse train, or from the wavelength of most other laser pulses in the pulse train. The pulse train is transmitted towards a target or object at which it is reflected and/or scattered. By means of an optical delay module, a received series of laser pulses having different wavelengths are spectrally combined in the receiver of the optical system, resulting in overlapping of at least some of the laser pulses output from the optical delay module. By the spectral combination of the received series of laser pulses, the received signal peak power and the signal-to-noise ratio in the receiver may be increased.

## Claims

1. An optical system (200) for distance measuring, the optical system comprising:
a transmitter (210) comprising:
a laser pulse generator (211) adapted to generate a series of laser pulses such that the laser pulses are delayed with respect to each other and such that at least some laser pulses have a wavelength different from the wavelengths of other laser pulses of the series of laser pulses;
wherein the transmitter is adapted to transmit the laser pulses towards a target or object (230); and
a receiver (220) adapted to receive a series of laser pulses having been generated by reflection and/or scattering of the laser pulses transmitted by the transmitter from the target or object, respectively;
**characterized in that** the receiver comprises:
a first optical delay module (223) adapted to delay laser pulses based on the wavelength of the respective laser pulses such that the magnitudes of delays of laser pulses having different wavelengths are different;
wherein the first optical delay module is arranged such that the magnitudes of delays corresponding to different wavelengths are such that at least some of the laser pulses that are output from the first optical delay module overlap each other in time.

2. An optical system according to claim 1, wherein the first optical delay module comprises:
a wavelength demultiplexer (224); and
a plurality of waveguides (225), wherein each of the plurality of waveguides corresponds to one of the wavelengths of the received series of laser pulses, and wherein each of the plurality of waveguides has a predefined length;
wherein the demultiplexer is arranged so as to demultiplex the received series of laser pulses onto the plurality of waveguides and wherein the magnitudes of the lengths of the respective waveguides are such that the laser pulses are coupled out from the plurality of waveguides at the same time, whereby the laser pulses that are output from the first optical delay module overlap each other in time.

3. An optical system according to claim 2, wherein the first optical delay module further comprises:
a wavelength multiplexer (226);
wherein each of the plurality of waveguides is coupled to the wavelength multiplexer; and
wherein the demultiplexer is arranged so as to demultiplex the received series of laser pulses onto the plurality of waveguides and wherein the magnitudes of the lengths of the respective waveguides are such that the laser pulses that are coupled into the wavelength multiplexer are coupled out from the wavelength multiplexer at the same time such that the laser pulses that are output from the first optical delay module overlap each other in time.

4. An optical system according to claim 1, wherein the transmitter further comprises:
an optical amplifier (212) adapted to amplify the series of laser pulses generated by the laser pulse generator (211);
a second optical delay module (215) adapted to delay the amplified laser pulses based on the wavelength of the respective laser pulses such that the magnitudes of delays corresponding to different sub-series of laser pulses having wavelengths within different wavelength sub-bands are different;
wherein the second optical delay module is arranged such that the magnitudes of delays corresponding to different sub-series of laser pulses having wavelengths within different wavelength sub-bands are such that the laser pulses are output from the second optical delay module such that the sub-series of laser pulses having wavelengths in different wavelength sub-bands overlap each other in time.

5. An optical system according to claim 4, wherein the second optical delay module comprises:
a wavelength demultiplexer (216); and
a plurality of waveguides (217), wherein each of the plurality of waveguides corresponds to one of the wavelength sub-bands, and wherein each of the plurality of waveguides has a predefined length;
wherein the demultiplexer is arranged so as to demultiplex the series of laser pulses received by the second optical delay module onto the plurality of waveguides and wherein the magnitudes of the lengths of the respective waveguides are such that the sub-series of laser pulses are coupled out from the plurality of waveguides at the same time, so that, the sub-series of laser pulses having wavelengths within different wavelength sub-bands that are output from the second optical delay module overlap each other in time.

6. An optical system according to claim 5, wherein the second optical delay module further comprises:
a wavelength multiplexer (218);
wherein each of the plurality of waveguides is coupled to the wavelength multiplexer; and
wherein the demultiplexer is arranged so as to demultiplex the received series of laser pulses onto the plurality of waveguides and wherein the magnitudes of the lengths of the respective waveguides are such that the sub-series of laser pulses that are coupled into the wavelength multiplexer are coupled out from the wavelength multiplexer at the same time such that the sub-series of laser pulses that are output from the second optical delay module overlap each other in time.

7. An optical system (200) for distance measuring, the optical system comprising:
a transmitter (210) comprising:
a laser pulse generator (211) adapted to generate a series of laser pulses such that the laser pulses are delayed with respect to each other and such that at least some laser pulses have a wavelength different from the wavelengths of other laser pulses of the series of laser pulses; and
an optical delay module (215) adapted to delay the laser pulses based on the wavelength of the respective laser pulses such that the magnitudes of delays of laser pulses having different wavelengths are different;
wherein the optical delay module is arranged such that the magnitudes of delays corresponding to different wavelengths are such that at least some of the laser pulses that are output from the optical delay module overlap each other in time;
wherein the transmitter is adapted to transmit the laser pulses, which are output from the optical delay module, towards a target or object (230); and
a receiver (220) adapted to receive laser pulses having been generated by reflection and/or scattering of the laser pulses transmitted by the transmitter from the target or object, respectively.

8. An optical system according to claim 7, wherein the optical delay module comprises:
a wavelength demultiplexer (216); and
a plurality of waveguides (217), wherein each of the plurality of waveguides corresponds to one of the wavelengths of the received series of laser pulses, and wherein each of the plurality of waveguides has a predefined length;
wherein the demultiplexer is arranged so as to demultiplex the received series of laser pulses onto the plurality of waveguides and wherein the magnitudes of the lengths of the respective waveguides are such that the laser pulses are coupled out from the plurality of waveguides at the same time, whereby the laser pulses that are output from the optical delay module overlap each other in time.

9. An optical system according to claim 8, wherein the optical delay module further comprises:
a wavelength multiplexer (218);
wherein each of the plurality of waveguides is coupled to the wavelength multiplexer; and
wherein the demultiplexer is arranged so as to demultiplex the received series of laser pulses onto the plurality of waveguides and wherein the magnitudes of the lengths of the respective waveguides are such that the laser pulses that are coupled into the wavelength multiplexer are coupled out from the wavelength multiplexer at the same time such that the laser pulses that are output from the optical delay module overlap each other in time.

10. A method (600) for transmitting laser pulses and receiving laser pulses, the method comprising:
generating (601) a series of laser pulses such that the laser pulses are delayed with respect to each other and such that at least some laser pulses have a wavelength different from the wavelengths of other laser pulses of the series of laser pulses;
transmitting (603) the laser pulses towards a target or object; and
receiving (604) a series of laser pulses having been generated by reflection and/or scattering of the laser pulses from the target or object, respectively;
**characterized by:**
delaying (605) received laser pulses based on the wavelength of the respective laser pulses, wherein the magnitudes of delays of laser pulses having different wavelengths are different, and the magnitudes of delays corresponding to different wavelengths are such so as to cause overlapping of at least some of the laser pulses with respect to each other in time.

11. A method according to claim 10, the method further comprising:
prior to transmitting the laser pulses towards the target or object, delaying (606) laser pulses in the generated series of laser pulses based on the wavelength of the respective laser pulses, such that the magnitudes of delays corresponding to different sub-series of laser pulses having wavelengths within different wavelength sub-bands are different, and wherein the magnitudes of delays corresponding to different sub-series of laser pulses having wavelengths within different wavelength sub-bands are such so as to cause the sub-series of laser pulses having wavelengths in different wavelength sub-bands to overlap each other in time.

12. A method (600) for transmitting laser pulses and receiving laser pulses, the method comprising:
generating (601) a series of laser pulses such that the laser pulses are delayed with respect to each other and such that at least some laser pulses have a wavelength different from the wavelengths of other laser pulses of the series of laser pulses;
delaying (607) laser pulses based on the wavelength of the respective laser pulses, wherein the magnitudes of delays of laser pulses having different wavelengths are different, and the magnitudes of delays corresponding to different wavelengths are such so as to cause overlapping of at least some of the laser pulses with respect to each other in time;
transmitting (603) the delayed laser pulses towards a target or object; and
receiving (604) a series of laser pulses having been generated by reflection and/or scattering of the laser pulses from the target or object, respectively.

13. A computer program product adapted to be executed in a processing unit of an optical system according to any one of claims 1-6, the computer program product comprising computer-readable means (800) carrying computer program code configured to, when executed in the processing unit of the optical system:
cause the transmitter to generate a series of laser pulses such that the laser pulses are delayed with respect to each other, and such at least some of the laser pulses have a wavelength different from the wavelengths of other laser pulses of the series of laser pulses;
cause the transmitter to transmit the laser pulses towards a target or object; and
cause the receiver to receive a series of laser pulses having been generated by reflection and/or scattering of the laser pulses from the target or object, respectively;
**characterized in that** the computer program code is further configured to, when executed in the processing unit of the optical system:
cause the first optical delay module in the receiver to delay laser pulses that have been received based on the wavelength of the respective laser pulses, wherein the magnitudes of delays of laser pulses having different wavelengths are different, and the magnitudes of delays corresponding to different wavelengths are such that at least some of the laser pulses that are output from the first optical delay module overlap each other in time.

14. A computer program product adapted to be executed in a processing unit of an optical system according to any one of claims 7-9, the computer program product comprising computer-readable means (800) carrying computer program code configured to, when executed in the processing unit of the optical system:
cause the transmitter to generate a series of laser pulses such that the laser pulses are delayed with respect to each other and such that at least some of the laser pulses have a wavelength different from the wavelengths of other laser pulses of the series of laser pulses;
cause the optical delay module to delay laser pulses based on the wavelength of the respective laser pulses, wherein the magnitudes of delays of laser pulses having different wavelengths are different, and the magnitudes of delays corresponding to different wavelengths are such that at least some of the laser pulses that are output from the optical delay module overlap each other in time;
cause the transmitter to transmit the delayed laser pulses towards a target or object; and
cause the receiver to receive a series of laser pulses having been generated by reflection and/or scattering of the laser pulses from the target or object, respectively.

15. A distance measuring device (900) comprising an optical system (200) according to any one of claims 1-9.

## Patentansprüche

1. Optisches System (200) zur Entfernungsmessung, wobei das optische System Folgendes umfasst:
einen Sender (210), umfassend:
einen Laserimpulsgeber (211), der geeignet ist, um eine Reihe von Laserimpulsen zu erzeugen, so dass die Laserimpulse im Verhältnis zueinander verzögert sind, und so dass mindestens einige Laserimpulse eine andere Wellenlänge als die Wellenlängen von anderen Laserimpulsen der Reihe von Laserimpulsen aufweisen;
wobei der Sender geeignet ist, um die Laserimpulse in Richtung auf ein Ziel oder Objekt (230) zu senden; und
einen Empfänger (220), der geeignet ist, um eine Reihe von Laserimpulsen zu empfangen, die jeweils durch Reflektieren und/oder Streuen der Laserimpulse, die durch den Sender von dem Ziel oder Objekt gesendet werden, erzeugt wurden;
**dadurch gekennzeichnet, dass** der Empfänger Folgendes umfasst:
ein erstes optisches Verzögerungsmodul (223), das geeignet ist, um Laserimpulse basierend auf der Wellenlänge der jeweiligen Laserimpulse zu verzögern, so dass die Größen der Verzögerungen der Laserimpulse, die verschiedene Wellenlängen aufweisen, unterschiedlich sind;
wobei das erste optische Verzögerungsmodul derart eingerichtet ist, dass die Größen der Verzögerungen, die verschiedenen Wellenlängen entsprechen, derart sind, dass sich mindestens einige der Laserimpulse, die von dem ersten optischen Verzögerungsmodul ausgegeben werden, im Verlauf der Zeit überlappen.

2. Optisches System nach Anspruch 1, wobei das erste optische Verzögerungsmodul Folgendes umfasst:
einen Wellenlängen-Demultiplexer (224); und
eine Vielzahl von Wellenleitern (225), wobei jeder der Vielzahl von Wellenleitern einer der Wellenlängen der empfangenen Reihe von Laserimpulsen entspricht, und wobei jeder der Vielzahl von Wellenleitern eine vordefinierte Länge aufweist;
wobei der Demultiplexer eingerichtet ist, um die empfangene Reihe von Laserimpulsen auf der Vielzahl von Wellenleitern zu demultiplexen, und wobei die Größen der Längen der jeweiligen Wellenleiter derart sind, dass die Laserimpulse aus der Vielzahl von Wellenleitern gleichzeitig ausgekoppelt werden, wodurch sich die Laserimpulse, die aus dem ersten optischen Verzögerungsmodul ausgegeben werden, im Verlauf der Zeit überlappen.

3. Optisches System nach Anspruch 2, wobei das erste optische Verzögerungsmodul ferner Folgendes umfasst:
einen Wellenlängen-Multiplexer (226);
wobei jeder der Vielzahl von Wellenleitern mit dem Wellenlängen-Multiplexer gekoppelt ist; und
wobei der Demultiplexer eingerichtet ist, um die empfangene Reihe von Laserimpulsen auf die Vielzahl von Wellenleitern zu demultiplexen, und wobei die Größen der Längen der jeweiligen Wellenleiter derart sind, dass die Laserimpulse, die in den Wellenlängen-Multiplexer eingekoppelt sind, aus dem Wellenlängen-Multiplexer gleichzeitig ausgekoppelt werden, so dass sich die Laserimpulse, die aus dem ersten optischen Verzögerungsmodul ausgegeben werden, im Verlauf der Zeit überlappen.

4. Optisches System nach Anspruch 1, wobei der Sender ferner Folgendes umfasst:
einen optischen Verstärker (212), der geeignet ist, um die Reihe von Laserimpulsen zu verstärken, die von dem Laserimpulsgeber (211) erzeugt wird;
ein zweites optisches Verzögerungsmodul (215), das geeignet ist, um die verstärkten Laserimpulse basierend auf der Wellenlänge der jeweiligen Laserimpulse derart zu verstärken, dass die Größen der Verzögerungen, die verschiedenen Teilreihen von Laserimpulsen entsprechen, die Wellenlängen innerhalb von verschiedenen Wellenlängenteilbändern aufweisen, unterschiedlich sind;
wobei das zweite optische Verzögerungsmodul derart eingerichtet ist, dass die Größen der Verzögerungen, die verschiedenen Teilreihen von Laserimpulsen entsprechen, die Wellenlängen innerhalb von verschiedenen Wellenlängenteilbändern aufweisen, derart sind, dass die Laserimpulse von dem zweiten optischen Verzögerungsmodul derart ausgegeben werden, dass sich die Teilreihe von Laserimpulsen, die Wellenlängen in verschiedenen Wellenlängenteilbändern aufweisen, im Verlauf der Zeit überlappt.

5. Optisches System nach Anspruch 4, wobei das zweite optische Verzögerungsmodul Folgendes umfasst:
einen Wellenlängen-Demultiplexer (216); und
eine Vielzahl von Wellenleitern (217), wobei jeder der Vielzahl von Wellenleitern einem der Wellenlängenteilbänder entspricht, und wobei jeder der Vielzahl von Wellenleitern eine vordefinierte Länge aufweist;
wobei der Demultiplexer derart eingerichtet ist, dass er die Reihe von Laserimpulsen, die von dem zweiten optischen Verzögerungsmodul empfangen wird, auf die Vielzahl von Wellenleitern demultiplext, und wobei die Größen der Längen der jeweiligen Wellenleiter derart sind, dass die Teilreihe von Laserimpulsen aus der Vielzahl von Wellenleitern gleichzeitig ausgekoppelt wird, so dass sich die Teilreihe von Laserimpulsen, die Wellenlängen innerhalb von verschiedenen Wellenlängenteilbändern aufweisen, die von dem zweiten optischen Verzögerungsmodul ausgegeben werden, im Verlauf der Zeit überlappt.

6. Optisches System nach Anspruch 5, wobei das zweite optische Verzögerungsmodul ferner Folgendes umfasst:
einen Wellenlängen-Multiplexer (218);
wobei jeder der Vielzahl von Wellenleitern mit dem Wellenlängen-Multiplexer gekoppelt ist; und
wobei der Demultiplexer eingerichtet ist, um die empfangene Reihe von Laserimpulsen auf die Vielzahl von Wellenleitern zu demultiplexen, und wobei die Größen der Längen der jeweiligen Wellenleiter derart sind, dass die Teilreihe von Laserimpulsen, die in den Wellenlängen-Multiplexer eingekoppelt sind, aus dem Wellenlängen-Multiplexer gleichzeitig ausgekoppelt werden, so dass sich die Teilreihe von Laserimpulsen, die von dem zweiten optischen Verzögerungsmodul ausgegeben werden, im Verlauf der Zeit überlappt.

7. Optisches System (200) zur Entfernungsmessung, wobei das optische System Folgendes umfasst:
einen Sender (210), umfassend:
einen Laserimpulsgeber (211), der geeignet ist, um eine Reihe von Laserimpulsen zu erzeugen, so dass die Laserimpulse im Verhältnis zueinander verzögert sind, und so dass mindestens einige Laserimpulse eine andere Wellenlänge als die Wellenlängen von anderen Laserimpulsen der Reihe von Laserimpulsen aufweisen; und
ein optisches Verzögerungsmodul (215), das geeignet ist, um die Laserimpulse basierend auf der Wellenlänge der jeweiligen Laserimpulse zu verzögern, so dass die Größen der Verzögerungen von Laserimpulsen, die verschiedene Wellenlängen aufweisen, unterschiedlich sind;
wobei das optische Verzögerungsmodul derart eingerichtet ist, dass die Größen von Verzögerungen, die verschiedenen Wellenlängen entsprechen, derart sind, dass sich mindestens einige der Laserimpulse, die von dem optischen Verzögerungsmodul ausgegeben werden, im Verlauf der Zeit überlappen;
wobei der Sender geeignet ist, um die Laserimpulse, die von dem optischen Verzögerungsmodul ausgegeben werden, in Richtung auf ein Ziel oder Objekt (230) zu senden; und
einen Empfänger (220), der geeignet ist, um eine Reihe von Laserimpulsen zu empfangen, die jeweils durch Reflektieren und/oder Streuen der Laserimpulse, die durch den Sender von dem Ziel oder Objekt gesendet werden, erzeugt wurden.

8. Optisches System nach Anspruch 7, wobei das optische Verzögerungsmodul Folgendes umfasst:
einen Wellenlängen-Demultiplexer (216); und
eine Vielzahl von Wellenleitern (225), wobei jeder der Vielzahl von Wellenleitern einer der Wellenlängen der empfangenen Reihe von Laserimpulsen entspricht, und wobei jeder der Vielzahl von Wellenleitern eine vordefinierte Länge aufweist;
wobei der Demultiplexer eingerichtet ist, um die empfangene Reihe von Laserimpulsen auf die Vielzahl von Wellenleitern zu demultiplexen, und wobei die Größen der Längen der jeweiligen Wellenleiter derart sind, dass die Laserimpulse aus der Vielzahl von Wellenleitern gleichzeitig ausgekoppelt werden, wodurch sich die Laserimpulse, die aus dem ersten optischen Verzögerungsmodul ausgegeben werden, im Verlauf der Zeit überlappen.

9. Optisches System nach Anspruch 8, wobei das optische Verzögerungsmodul ferner Folgendes umfasst:
einen Wellenlängen-Multiplexer (218);
wobei jeder der Vielzahl von Wellenleitern mit dem Wellenlängen-Multiplexer gekoppelt ist; und
wobei der Demultiplexer eingerichtet ist, um die empfangene Reihe von Laserimpulsen auf die Vielzahl von Wellenleitern zu demultiplexen, und wobei die Größen der Längen der jeweiligen Wellenleiter derart sind, dass die Laserimpulse, die in den Wellenlängen-Multiplexer eingekoppelt sind, aus dem Wellenlängen-Multiplexer gleichzeitig ausgekoppelt werden, so dass sich die Laserimpulse, die von dem optischen Verzögerungsmodul ausgegeben werden, im Verlauf der Zeit überlappen.

10. Verfahren (600) zum Senden von Laserimpulsen und Empfangen von Laserimpulsen, wobei das Verfahren folgende Schritte umfasst:
Erzeugen (601) einer Reihe von Laserimpulsen, so dass die Laserimpulse im Verhältnis zueinander verzögert sind, und so dass mindestens einige Laserimpulse eine andere Wellenlänge als die Wellenlängen der anderen Laserimpulse der Reihe von Laserimpulsen aufweisen;
Senden (603) der Laserimpulse in Richtung auf ein Ziel oder Objekt; und
Empfangen (604) einer Reihe von Laserimpulsen, die jeweils durch Reflektieren und/oder Streuen der Laserimpulse von dem Ziel oder Objekt erzeugt wurden;
**gekennzeichnet durch**:
Verzögern (605) empfangener Laserimpulse basierend auf der Wellenlänge der jeweiligen Laserimpulse, wobei die Größen der Verzögerungen der Laserimpulse, die verschiedene Wellen aufweisen, unterschiedlich sind, und die Größen der Verzögerungen, die den verschiedenen Wellenlängen entsprechen, derart sind, dass sie ein Überlappen von mindestens einigen der Laserimpulse im Verlauf der Zeit bewirken.

11. Verfahren nach Anspruch 10, wobei das Verfahren ferner folgende Schritte umfasst:
vor dem Senden der Laserimpulse in Richtung auf das Ziel oder Objekt, Verzögern (606) der Laserimpulse in der erzeugten Reihe von Laserimpulsen basierend auf der Wellenlänge der jeweiligen Laserimpulse, so dass die Größen der Verzögerungen, die verschiedenen Teilreihen von Laserimpulsen entsprechen, die Wellenlängen innerhalb von verschiedenen Wellenlängenteilbändern aufweisen, unterschiedlich sind, und wobei die Größen von Verzögerungen, die anderen Teilreihen von Laserimpulsen entsprechen, die Wellenlängen innerhalb von verschiedenen Wellenlängenteilbändern aufweisen, derart sind, dass die bewirken, dass sich die Teilreihen von Laserimpulsen, die Wellenlängen in verschiedenen Wellenlängenteilbändern aufweisen, im Verlauf der Zeit überlappen.

12. Verfahren (600) zum Senden von Laserimpulsen und Empfangen von Laserimpulsen, wobei das Verfahren folgende Schritte umfasst:
Erzeugen (601) einer Reihe von Laserimpulsen, so dass die Laserimpulse im Verhältnis zueinander verzögert sind, und so dass mindestens einige Laserimpulse eine andere Wellenlänge als die Wellenlängen der anderen Laserimpulse der Reihe von Laserimpulsen aufweisen;
Verzögern (607) der Laserimpulse basierend auf der Wellenlänge der jeweiligen Laserimpulse, wobei die Größen der Verzögerungen der Laserimpulse, die verschiedene Wellenlängen aufweisen, unterschiedlich sind, und die Größen der Verzögerungen, die verschiedenen Wellenlängen entsprechen, derart sind, dass sie ein gegenseitiges Überlappen mindestens einiger der Laserimpulse im Verlauf der Zeit bewirken;
Senden (603) der verzögerten Laserimpulse in Richtung auf ein Ziel oder Objekt; und
Empfangen (604) einer Reihe von Laserimpulsen, die jeweils durch Reflektieren und/oder Streuen der Laserimpulse von dem Ziel oder Objekt erzeugt wurden.

13. Computerprogrammprodukt, das geeignet ist, um in einer Verarbeitungseinheit eines optischen Systems nach einem der Ansprüche 1 bis 6 ausgeführt zu werden, wobei das Computerprogrammprodukt computerlesbare Mittel (800) umfasst, die Computerprogrammcode enthalten, der, wenn er in der Verarbeitungseinheit des optischen Systems ausgeführt wird, konfiguriert ist zum:
Bewirken, dass der Sender eine Reihe von Laserimpulsen erzeugt, so dass die Laserimpulse im Verhältnis zueinander verzögert sind, und so dass mindestens einige der Laserimpulse eine andere Wellenlänge als die Wellenlängen der anderen Laserimpulse der Reihe von Laserimpulsen aufweisen;
Bewirken, dass der Sender die Laserimpulse in Richtung auf ein Ziel oder Objekt sendet; und
Bewirken, dass der Empfänger eine Reihe von Laserimpulsen empfängt, die jeweils durch Reflektieren und/oder Streuen der Laserimpulse von dem Ziel oder Objekt erzeugt wurden;
**dadurch gekennzeichnet, dass** der Computerprogrammcode, wenn er in der Verarbeitungseinheit des optischen Systems ausgeführt wird, ferner konfiguriert ist zum:
Bewirken, dass das erste optische Verzögerungsmodul in dem Empfänger Laserimpulse, die empfangen wurden, basierend auf der Wellenlänge der jeweiligen Laserimpulse verzögert, wobei die Größen der Verzögerungen der Laserimpulse, die verschiedene Wellenlängen aufweisen, unterschiedlich sind, und die Größen der Verzögerungen, die verschiedenen Wellenlängen entsprechen, derart sind, dass sich mindestens einige der Laserimpulse, die von dem ersten optischen Verzögerungsmodul ausgegeben werden, im Verlauf der Zeit überlappen.

14. Computerprogrammprodukt, das geeignet ist, um in einer Verarbeitungseinheit eines optischen Systems nach einem der Ansprüche 7 bis 9 ausgeführt zu werden, wobei das Computerprogrammprodukt computerlesbare Mittel (800) umfasst, die Computerprogrammcode enthalten, der, wenn er in der Verarbeitungseinheit des optischen Systems ausgeführt wird, konfiguriert ist zum:
Bewirken, dass der Sender eine Reihe von Laserimpulsen erzeugt, so dass die Laserimpulse im Verhältnis zueinander verzögert sind, und so dass mindestens einige der Laserimpulse eine andere Wellenlänge als die Wellenlängen der anderen Laserimpulse der Reihe von Laserimpulsen aufweisen;
Bewirken, dass das optische Verzögerungsmodul Laserimpulse basierend auf der Wellenlänge der jeweiligen Laserimpulsen verzögert, wobei die Größen der Verzögerungen der Laserimpulse, die verschiedene Wellenlängen aufweisen, unterschiedlich sind, und die Größen der Verzögerungen, die verschiedenen Wellenlängen entsprechen, derart sind, dass sich mindestens einige der Laserimpulse, die von dem optischen Verzögerungsmodul ausgegeben werden, im Verlauf der Zeit überlappen;
Bewirken, dass der Sender die verzögerten Laserimpulse in Richtung auf ein Ziel oder Objekt sendet; und
Bewirken, dass der Empfänger eine Reihe von Laserimpulsen empfängt, die jeweils durch Reflektieren und/oder Streuen der Laserimpulse von dem Ziel oder Objekt erzeugt wurden.

15. Entfernungsmessvorrichtung (900), umfassend ein optisches System (200) nach einem der Ansprüche 1 bis 9.

## Revendications

1. Système optique (200) de mesure de distance, ce système optique comprenant :
un transmetteur (210) comportant :
un générateur d'impulsions laser (211) apte à générer une série d'impulsions laser de manière à ce que les impulsions laser soit retardées les unes par rapport aux autres et à ce que certaines des impulsions laser aient une longueur d'onde différente des longueurs d'ondes des autres impulsions laser de la série d'impulsions laser ;
le transmetteur étant apte à transmettre les impulsions laser vers une cible ou un objet (230) ;
un récepteur (220) apte à recevoir une série d'impulsions laser ayant été générées par réfléchissement et/ou dispersion des impulsions laser transmises respectivement par le transmetteur depuis la cible ou l'objet ;
**caractérisé en ce que** le récepteur comprend :
un premier module de retardement optique (223) apte à retarder les impulsions laser en se basant sur la longueur d'onde des impulsions laser respectives de manière à ce que les amplitudes des retardements des impulsions laser ayant des longueurs d'ondes différentes soient différentes ;
dans lequel le premier module de retardement optique est conçu de manière à ce que les amplitudes des retardements correspondant à des longueurs d'ondes différentes soient telles qu'au moins certaines des impulsions laser qui sont émises par le premier module de retardement optique se chevauchent mutuellement dans le temps.

2. Système optique selon la revendication 1, dans lequel le premier module de retardement optique comprend :
un démultiplexeur de longueur d'onde (224) ; et
une pluralité de guides d'ondes (225), chacun de la pluralité de guides d'ondes correspondant à une des longueurs d'ondes de la série reçue d'impulsions laser et chacun de la pluralité de guides d'ondes ayant une longueur prédéfinie ;
le démultiplexeur étant conçu pour démultiplexer la série reçue d'impulsions laser sur la pluralité de guides d'ondes et les amplitudes des longueurs des guides d'ondes respectifs étant telles que les impulsions laser soient désaccouplées de la pluralité de guides d'ondes en même temps, ce qui a pour effet que les impulsions laser qui sont émises depuis le premier module de retardement optique se chevauchent mutuellement dans le temps.

3. Système optique selon la revendication 2, dans lequel le premier module de retardement optique comprend :
un multiplexeur de longueur d'onde (226) ;
chacun de la pluralité des guides d'ondes étant couplé au multiplexeur de longueur d'onde ; et
le démultiplexeur étant conçu pour démultiplexer la série reçue d'impulsions laser sur la pluralité de guides d'ondes et les amplitudes des longueurs des guides d'ondes respectifs étant telles que les impulsions laser qui sont couplées au multiplexeur de longueur d'onde soient désaccouplées du multiplexeur de longueur d'onde en même temps de manière à ce que les impulsions laser qui sont émises depuis le premier module de retardement optique se chevauchent mutuellement dans le temps.

4. Système optique selon la revendication 1, dans lequel le transmetteur comprend en outre :
un amplificateur optique (212) apte à amplifier la série d'impulsions laser générées par le générateur d'impulsions laser (211) ;
un second module de retardement optique (215) apte à retarder les impulsions laser amplifiées en se basant sur la longueur d'onde des impulsions laser respectives de manière à ce que les amplitudes des retardements correspondant à différentes sous-séries d'impulsions laser ayant des longueurs d'ondes se situant dans différentes sous-bandes de longueurs d'ondes soient différentes ;
le second module de retardement optique étant conçu de manière à ce que les amplitudes des retardements correspondant à différentes sous-séries d'impulsions laser ayant des longueurs d'ondes différentes dans différentes sous-bandes de longueurs d'ondes soient telles que les impulsions laser soient émises depuis le second module de retardement optique de manière à ce que les sous-séries d'impulsions laser ayant des longueurs d'ondes différentes dans différentes sous-bandes de longueurs d'ondes se chevauchent mutuellement dans le temps.

5. Système optique selon la revendication 4, dans lequel le second module de retardement optique comprend :
un démultiplexeur de longueur d'onde (216) ; et
une pluralité de guides d'ondes (217), chacun de la pluralité de guides d'ondes correspondant à une des sous-bandes de longueurs d'ondes et chacun de la pluralité de guides d'ondes ayant une longueur prédéfinie ;
le démultiplexeur étant conçu pour démultiplexer la série d'impulsion laser reçues par le second module de retardement optique sur la pluralité de guides d'ondes et les amplitudes des longueurs des guides d'ondes respectifs étant telles que les sous-séries d'impulsions laser soient désaccouplées de la pluralité de guides d'ondes en même temps de manière à ce que les sous-séries d'impulsions laser ayant des longueurs d'onde dans différentes sous-bandes de longueurs d'ondes qui sont émises depuis le second module de retardement optique se chevauchent mutuellement dans le temps.

6. Système optique selon la revendication 5, dans lequel le second module de retardement optique comprend en outre :
un multiplexeur de longueur d'onde (218) ;
chacun de la pluralité des guides d'ondes étant couplé au multiplexer de longueur d'onde ; et
le démultiplexeur étant conçu pour démultiplexer la série reçue d'impulsions laser sur la pluralité de guides d'ondes et les amplitudes des longueurs des guides d'ondes respectifs étant telles que les sous-séries d'impulsions laser qui sont couplées au multiplexer de longueur d'onde soient désaccouplées du multiplexeur de longueur d'onde en même temps de manière à ce que les sous-séries d'impulsions laser qui sont émises depuis le second module de retardement optique se chevauchent mutuellement dans le temps.

7. Système optique (200) de mesure de distance, ce système optique comprenant :
un transmetteur (210) comportant :
un générateur d'impulsions laser (211) apte à générer une série d'impulsions laser de manière à ce que les impulsions laser soit retardées les unes par rapport aux autres et à ce que certaines des impulsions laser aient une longueur d'onde différente des longueurs d'ondes des autres impulsions laser de la série d'impulsions laser ;
un module de retardement optique (215) apte à retarder les impulsions laser en se basant sur la longueur d'onde des impulsions laser respectives de manière à ce que les amplitudes des retardements des impulsions laser ayant des longueurs d'ondes différentes soient différentes ;
le module de retardement optique étant conçu de manière à ce que les amplitudes des retardements correspondant à des longueurs d'ondes différentes soient telles qu'au moins certaines des impulsions laser qui sont émises par le premier module de retardement optique se chevauchent mutuellement dans le temps ;
le transmetteur étant apte à transmettre les impulsions laser qui sont émises par le module de retardement optique vers une cible ou un objet (230) ; et
un récepteur (220) apte à recevoir une série d'impulsions laser ayant été générées par réfléchissement et/ou dispersion des impulsions laser transmises respectivement par le transmetteur depuis la cible ou l'objet.

8. Système optique selon la revendication 7, dans lequel le module de retardement optique comprend :
un démultiplexeur de longueur d'onde (216) ; et
une pluralité de guides d'ondes (217), chacun de la pluralité de guides d'ondes correspondant à une des longueurs d'ondes de la série reçue d'impulsions laser et chacun de la pluralité de guides d'ondes ayant une longueur prédéfinie ;
le démultiplexeur étant conçu pour démultiplexer la série reçue d'impulsions laser sur la pluralité de guides d'ondes et les amplitudes des longueurs des guides d'ondes respectifs étant telles que les impulsions laser soient désaccouplées de la pluralité de guides d'ondes en même temps, ce qui a pour effet que les impulsions laser qui sont émises depuis le premier module de retardement optique se chevauchent mutuellement dans le temps.

9. Système optique selon la revendication 8, dans lequel le module de retardement optique comprend en outre :
un multiplexeur de longueur d'onde (218) ;
chacun de la pluralité des guides d'ondes étant couplé au multiplexeur de longueur d'onde ; et
le démultiplexeur étant conçu pour démultiplexer la série reçue d'impulsions laser sur la pluralité de guides d'ondes et les amplitudes des longueurs des guides d'ondes respectifs étant telles que les impulsions laser qui sont couplées au multiplexeur de longueur d'onde soient désaccouplées du multiplexeur de longueur d'onde en même temps de manière à ce que les impulsions laser qui sont émises depuis le premier module de retardement optique se chevauchent mutuellement dans le temps.

10. Procédé (600) de transmission d'impulsions laser et de réception d'impulsions laser, ce procédé comprenant :
la génération (601) d'une série d'impulsions laser de manière à ce que les impulsions laser soient retardées les unes par rapport aux autres et à ce que certaines impulsions laser aient une longueur d'onde différente des longueurs d'ondes des autres impulsions laser de la série d'impulsions laser ;
la transmission (603) des impulsions laser vers une cible ou un objet ;
la réception (604) d'une série d'impulsions laser ayant été générées respectivement par réfléchissement et/ou dispersion des impulsions laser depuis la cible ou l'objet ;
**caractérisé par** :
le retardement (605) des impulsions laser reçues en se basant sur la longueur d'onde des impulsions laser respectives, les amplitudes des retardements des impulsions laser ayant des longueurs d'ondes différentes étant différentes et les amplitudes des retardements correspondant à des longueurs d'ondes différentes étant de nature à entraîner le chevauchement mutuel d'au moins certaine des impulsions laser dans le temps.

11. Procédé selon la revendication 10, ce procédé comprenant en outre :
avant la transmission des impulsions laser vers la cible ou l'objet,
le retardement (606) des impulsions laser dans la série générée d'impulsions laser en se basant sur la longueur d'onde des impulsions laser respectives de manière à ce que les amplitudes des retardements correspondant à différentes sous-séries d'impulsions laser ayant des longueurs d'ondes se situant dans différentes sous-bandes de longueurs d'ondes soient différentes et les amplitudes des retardements correspondant à différentes sous-séries d'impulsions laser ayant des longueurs d'ondes se situant dans différentes sous-bandes de longueur d'onde étant de nature à amener les sous-séries d'impulsions laser ayant des longueurs d'ondes différente dans différentes sous bandes de longueur d'onde à se chevaucher mutuellement dans le temps.

12. Procédé (600) de transmission impulsions laser et de réception d'impulsions laser, ce procédé comprenant :
la génération (601) d'une série d'impulsions laser de manière à ce que les impulsions laser soient retardées les unes par rapport aux autres et à ce que certaines impulsions laser aient une longueur d'onde différente des longueurs d'ondes des autres impulsions laser de la série d'impulsions laser ;
le retardement (607) des impulsions laser en se basant sur la longueur d'onde des impulsions laser respectives, les amplitudes des retardements des impulsions laser ayant des longueurs d'ondes différentes étant différentes et les amplitudes des retardements correspondant à des longueurs d'ondes différentes étant de nature à entraîner le chevauchement mutuel d'au moins certaines des impulsions laser dans le temps ;
la transmission (603) des impulsions laser retardées vers une cible ou un objet ;
la réception (604) d'une série d'impulsions laser ayant été générées par réfléchissement et/ou dispersion des impulsions laser respectivement depuis la cible ou l'objet.

13. Produit de programmation informatique apte à être exécuté dans une unité de traitement d'un système optique selon l'une quelconque des revendications 1 à 6, ce produit de programmation informatique comprenant un moyen lisible par ordinateur (800) portant un code de programme informatique conçu pour, lors de son exécution dans l'unité de traitement du système optique :
amener le transmetteur à générer une série d'impulsions laser telle que les impulsions laser soient retardées les unes par rapport aux autres et qu'au moins certaines des impulsions laser aient une longueur d'onde différente des longueurs d'ondes d'autres impulsions laser de la série d'impulsions laser ;
amener le transmetteur à transmettre les impulsions laser vers une cible ou un objet ; et
amener le récepteur à recevoir une série d'impulsions laser ayant été générées respectivement par réfléchissement et/ou dispersion des impulsions laser depuis la cible ou l'objet ;
**caractérisé en ce que** le code de programme informatique est en outre conçu pour, lors de son exécution dans l'unité de traitement du système optique :
amener le premier module de retardement optique dans le récepteur à retarder des impulsions laser qui ont été reçues en se basant sur la longueur d'onde des impulsions laser respectives,
les amplitudes des retardements des impulsions laser ayant différentes longueurs d'onde étant différentes et les amplitudes des retardements correspondant à différentes longueurs d'onde étant telles qu'au moins certaines des impulsions laser qui sont émises par le premier module de retardement optique se chevauchent mutuellement dans le temps.

14. Produit de programmation informatique apte à être exécuté dans une unité de traitement d'un système optique selon l'une quelconque des revendications 7 à 9, ce produit de programmation informatique comprenant un moyen lisible par ordinateur (800) portant un code de programme informatique conçu pour, lors de son exécution dans l'unité de traitement du système optique :
amener le transmetteur à générer une série d'impulsions laser telle que les impulsions laser soient retardées les unes par rapport aux autres et qu'au moins certaines des impulsions laser aient une longueur d'onde différente des longueurs d'ondes d'autres impulsions laser de la série d'impulsions laser ;
amener le module de retardement optique à retarder les impulsions laser en se basant sur la longueur d'onde des impulsions laser respectives, les amplitudes des retardements des impulsions laser ayant des longueurs d'ondes différentes étant différentes et les amplitudes des retardements correspondant à différentes longueurs d'onde étant telles qu'au moins certaines des impulsions laser qui sont émises par le module de retardement optique se chevauchent mutuellement dans le temps ;
amener le transmetteur à transmettre les impulsions laser vers une cible ou un objet ; et
amener le récepteur à recevoir une série d'impulsions laser ayant été générées respectivement par réfléchissement et/ou dispersion des impulsions laser depuis la cible ou l'objet.

15. Dispositif de mesure de distance (900) comprenant un système optique (200) selon l'une quelconque des revendications 1 à 9.
